# EUROPÄISCHE PATENTSCHRIFT

(11) **EP 4 460 891 B1**
(45) Veröffentlichungstag und Bekanntmachung des Hinweises auf die Patenterteilung: **23.07.2025**
(21) Anmeldenummer: 23704940.8
(22) Anmeldetag: 10.02.2023
(51) Int. Cl.: H02K 41/03, B65G 54/02

(54) **PLANARANTRIEBSSYSTEM UND VERFAHREN ZUM BETREIBEN EINES PLANARANTRIEBSSYSTEMS**
PLANAR DRIVE SYSTEM AND METHOD FOR OPERATING A PLANAR DRIVE SYSTEM
SYSTÈME D'ENTRAÎNEMENT PLANAIRE ET PROCÉDÉ DE FONCTIONNEMENT D'UN SYSTÈME D'ENTRAÎNEMENT PLANAIRE

(30) Priorität: 11.02.2022 DE 102022103261
(43) Veröffentlichungstag der Anmeldung: 13.11.2024
(73) Patentinhaber: Beckhoff Automation GmbH, 33415 Verl (DE)
(72) Erfinder: BENTFELD, Lukas, 33129 Delbrück (DE); BECKHOFF, Johannes, 33758 Schloß Holte-Stukenbrock (DE); SCHULTE, Felix, 33397 Rietberg (DE); PRÜSSMEIER, Uwe, 32657 Lemgo (DE); MAGUIRE, Keir, Vancouver, British Columbia V6K 4S7 (CA)
(74) Vertreter: Patentanwaltskanzlei WILHELM & BECK
(86) Internationale Anmeldenummer: PCT/EP2023/053348
(87) Internationale Veröffentlichungsnummer: WO 2023/152315

(56) Entgegenhaltungen:
- DE-A1- 102019 117 431
- DE-A1- 102020 120 282
- KR-B1- 101 974 185
- US-A1- 2008 238 220
- US-A1- 2015 360 878
- US-A1- 2016 347 550
- US-A1- 2017 331 359
- US-A1- 2020 030 995
- US-A1- 2022 009 710

## Beschreibung

Die Erfindung betrifft ein Planarantriebssystem sowie ein Verfahren zum Betreiben eines Planarantriebssystems.

Diese Patentanmeldung beansprucht die Priorität der deutschen Patentanmeldung DE 10 2022 103 261.2 vom 11. Februar 2022.

Planarantriebssysteme können unter anderem in der Automatisierungstechnik, insbesondere der Fertigungstechnik, der Handhabungstechnik und der Verfahrenstechnik eingesetzt werden. Mittels Planarantriebssystemen kann ein bewegliches Element einer Anlage oder Maschine in mindestens zwei linear unabhängigen Richtungen bewegt oder positioniert werden. Planarantriebssysteme können einen permanent erregten elektromagnetischen Planarmotor mit einem planaren Stator und einen auf dem Stator in mindestens zwei Richtungen beweglichen Läufer umfassen.

Bei einem permanent erregten elektromagnetischen Planarmotor wird dadurch eine Antriebskraft auf den Läufer ausgeübt, dass bestromte Spulengruppen einer Statoreinheit mit Antriebsmagneten mehrerer Magnetanordnungen des Läufers magnetisch wechselwirken. Aus dem Stand der Technik sind Planarantriebssysteme mit rechteckigen und längsgestreckten Spulengruppen und rechteckigen und längsgestreckten Magnetanordnungen des Läufers bekannt. Ein solches Planarantriebssystem wird beispielsweise in der DE 10 2017 131 304 A1 beschrieben. Mit einem solchen Planarantriebssystem wird insbesondere eine lineare und translative Bewegung des Läufers möglich. Das bedeutet, dass mittels eines solchen Planarantriebssystems der Läufer oberhalb einer Statorfläche, unter der die rechteckigen und längsgestreckten Spulengruppen angeordnet sind, parallel zur Statorfläche frei beweglich und senkrecht zur Statorfläche zumindest in verschiedenen Abständen zur Statorfläche bewegt werden kann.

Wird ein solches Planarantriebssystem in der Automatisierungstechnik, insbesondere der Fertigungstechnik, der Handhabungstechnik und der Verfahrenstechnik eingesetzt, kann es notwendig sein, vorgegebene Sicherheitsmechanismen zu erfüllen, um beispielsweise menschliche Bediener des Planarantriebssystems vor Unfällen und damit vor Verletzungen zu schützen oder Komponenten des Planarantriebssystems bei Störungen oder bei einem Systemausfall, beispielweise einem Spannungsausfall, vor Defekten oder Zerstörung zu schützen. Bisher sind solche Schutzmechanismen nicht beschrieben. Ferner kann es notwendig sein, vom Planarantriebssystem bewegte Objekte zu schützen. Auch hierfür ist derzeit kein entsprechender Schutzmechanismus bekannt.

Aus der DE 10 2020 120282 A1 ist sind die Merkmale der Oberbegriffe der unabhängigen Patentansprüche bekannt. Die DE 10 2020 120282 A1 offenbart ein Planarantriebssystem, bei dem auf der Statorfläche ein abgegrenzter Bereich mit einem Gehäuse vorgesehen ist, das unter anderem zum Einschleusen eines Läufers dienen kann.

Es ist eine Aufgabe der Erfindung, ein verbessertes Planarantriebssystem bereitzustellen. Eine weitere Aufgabe der Erfindung ist es, ein Betriebssystem beziehungsweise ein Verfahren zum Betreiben für ein solches Planarantriebssystem bereitzustellen.

Diese Aufgaben werden mit dem Planarantriebssystem und dem Verfahren zum Betreiben eines Planarantriebssystems der unabhängigen Patentansprüche 1 und 5 gelöst. Vorteilhafte Weiterbildungen sind jeweils in abhängigen Patentansprüchen angegeben.

Ein Planarantriebssystem umfasst zumindest eine Statoreinheit mit jeweils einer Mehrzahl von Spulengruppen zum Erzeugen eines Statormagnetfelds, eine Statorfläche oberhalb der Statoreinheit, sowie einen Läufer. Die Statoreinheit mit den Spulengruppen kann dabei in einem Statormodul angeordnet sein. Der Läufer weist eine Mehrzahl von Magneteinheiten zum Erzeugen eines Läufermagnetfelds auf. In einem ersten Betriebszustand ist der Läufer oberhalb der Statorfläche mittels einer Wechselwirkung des Statormagnetfelds mit dem Läufermagnetfeld parallel zur Statorfläche bewegbar. In einem zweiten Betriebszustand ist der Läufer in hinsichtlich seiner Bewegbarkeit parallel zur Statorfläche durch ein Sicherheitssystem zumindest eingeschränkt, wobei durch das Sicherheitssystem ferner der Läufer im zweiten Betriebszustand hinsichtlich seiner Bewegbarkeit senkrecht zur Statorfläche zumindest eingeschränkt ist.

Das Sicherheitssystem dient also dazu, den Läufer im zweiten Betriebszustand hinsichtlich seiner Bewegbarkeit sowohl parallel zur Statorfläche als auch senkrecht zur Statorfläche einzuschränken. Dadurch kann beispielsweise erreicht werden, dass menschliche Bediener des Planarantriebssystems vor Unfällen und damit vor Verletzungen geschützt werden. Ferner kann dadurch erreicht werden, dass vom Planarantriebssystem bewegte Objekte geschützt werden.

Der erste Betriebszustand umfasst dabei ein freies Bewegen des Läufers oder gegebenenfalls mehrerer Läufer, während der zweite Betriebszustand ein Sichern zumindest eines Läufers umfasst, wobei das Sichern des Läufers dadurch erfolgt, dass der Läufer hinsichtlich seiner Bewegbarkeit zumindest eingeschränkt ist.

In einer beispielhaften Ausführungsform des Planarantriebssystems, die nicht zur Erfindung gehört, kann das Sicherheitssystem eine passive Sicherheitsvorrichtung umfassen. Die passive Sicherheitsvorrichtung schränkt den Läufer in seiner Bewegbarkeit ein. Unter dem Begriff passive Sicherheitsvorrichtung wird dabei eine Sicherheitsvorrichtung ohne bewegliche Teile verstanden. Die Einschränkung des Läufers in seiner Bewegbarkeit erfolgt also ohne bewegliche Teile, sondern durch fest installierte Elemente.

Die passive Sicherheitsvorrichtung erschwert bei einem Ausfall der Bestromung der Spulengruppen eine daraus resultierende Entfernung des Läufers von der Statorfläche. Es kann vorgesehen sein, dass die Entfernung des Läufers von der Statorfläche vollständig verhindert wird. Dies ist insbesondere dann vorteilhaft, wenn das Planarantriebssystem eine Einbaulage aufweist, in der die Statorfläche nicht waagerecht angeordnet ist oder in der die Statorfläche zwar waagerecht angeordnet ist, der Läufer aber bezogen auf den Erdmittelpunkt unterhalb der Statorfläche angeordnet ist. In diesen Fällen könnte sich bei einem Ausfall der Bestromung der Läufer unkontrolliert von der Statorfläche entfernen und dabei Personen gefährden. Ferner könnte es sein, dass durch eine unkontrollierte Entfernung des Läufers von der Statorfläche vom Läufer transportierte Objekte beschädigt werden. Mittels der passiven Sicherheitsvorrichtung kann das Risiko der Gefährdung einer Person oder der Beschädigung eines Objekts jeweils vermindert oder gegebenenfalls sogar vollständig verhindert werden.

In einer beispielhaften Ausführungsform des Planarantriebssystems, die nicht zur Erfindung gehört, kann die passive Sicherheitsvorrichtung eine Klettverbindung umfassen. Die Klettverbindung kann insbesondere für Planarantriebssysteme mit nicht waagerecht angeordneter Statorfläche verwendet werden.

Hierbei ist ein erster Klettstreifen am Läufer und ein zweiter Klettstreifen an der Statorfläche angeordnet. Dabei kann vorgesehen sein, dass der erste Klettstreifen ein Hakenband und der zweite Klettstreifen ein Flauschband umfasst oder umgekehrt. Ferner ist auch anstelle des Flauschbands ein Velourband möglich. Alternativ kann das Hakenband durch ein Pilzkopfband ersetzt werden. In einer Ausgestaltung umfasst sowohl der erste Klettstreifen als auch der zweite Klettstreifen ein Pilzkopfband.

In den Ausgestaltungen der passiven Sicherheitsvorrichtung mit Klettstreifen kann insbesondere ein Ausfall der Bestromung der Spulengruppen dazu führen, dass sich der Läufer auf die Statorfläche absenkt, da die Wechselwirkung zwischen dem Statormagnetfeld und dem Läufermagnetfeld wegfällt. Durch den ersten Klettstreifen und den zweiten Klettstreifen sind der Läufer und die Statorfläche anschließend miteinander verbunden, sodass ein unkontrolliertes Entfernen des Läufers von der Statorfläche vermieden werden kann. Dies kann insbesondere dann vorteilhaft sein, wenn die Statorfläche nicht waagerecht ist und eine Haftreibung zwischen Läufer und Statorfläche nicht ausreichend wäre, einer Hangabtriebskraft des Läufers entgegenzuwirken, sodass der Läufer die Statorfläche entlang nach unten rutschen würde.

In einer beispielhaften Ausführungsform des Planarantriebssystems, die nicht zur Erfindung gehört, kann die passive Sicherheitsvorrichtung eine oberhalb der Statorfläche angeordnete Doppelschiene umfassen. Eine Doppelschiene ist dabei eine Vorrichtung mit zwei einzelnen Auflageflächen. Ein Objekthalter des Läufers kann zwischen den Auflageflächen der Doppelschienen geführt sein. Die Doppelschiene kann dann beispielsweise, wenn ein Objekt vom Läufer entfernt werden soll, den Läufer festhalten und somit ein Abnehmen des Läufers vom Planarantriebssystem verhindern, da durch die Doppelschiene eine Bewegung des Läufers von der Statorfläche weg verhindert werden kann.

Beispielsweise ist das Planarantriebssystem derart angeordnet, dass bei einem Ausfall der Bestromung der Spulengruppen sich der Läufer aufgrund der Gravitation von der Statorfläche entfernt, wobei der Läufer mittels der Doppelschiene aufgefangen werden kann. Dies kann beispielsweise dann der Fall sein, wenn die Statorfläche waagerecht angeordnet ist und der Läufer bezogen auf den Erdmittelpunkt unterhalb der Statorfläche angeordnet ist. Eine solche Anordnung kann auch als Kopf-über-Anordnung bezeichnet werden.

Im erfindungsgemäßen Planarantriebssystem umfasst das Sicherheitssystem eine aktive Sicherheitsvorrichtung, wobei die aktive Sicherheitsvorrichtung den Läufer in seiner Bewegbarkeit einschränkt. Unter dem Begriff aktive Sicherheitsvorrichtung wird dabei eine Sicherheitsvorrichtung verstanden, bei der eine gesteuerte Sicherung des Läufers, beispielsweise mit beweglichen Teilen oder mittels einer speziellen Bestromung der Spulengruppen möglich ist. Die Einschränkung des Läufers in seiner Bewegbarkeit erfolgt also gesteuert.

In einer Ausführungsform des Planarantriebssystems umfasst die aktive Sicherheitsvorrichtung eine Steuereinheit, wobei die Steuereinheit eingerichtet ist, für eine Betriebssicherheit relevante Betriebsparameter auszuwerten und das Planarantriebssystem in den zweiten Betriebszustand zu überführen, wenn eine Auswertung der relevanten Betriebsparameter ergibt, dass ein unsicherer Betrieb vorliegen könnte. Die Auswertung der relevanten Betriebsparameter kann beispielsweise umfassen, dass überwacht wird, ob eine Stromversorgung zur Verfügung steht.

In einer beispielhaften Ausführungsform des Planarantriebssystems, die nicht zur Erfindung gehört, kann die aktive Sicherheitsvorrichtung eine unterbrechungsfreie Stromversorgung umfassen. So kann beispielsweise auch bei Ausfall der Stromversorgung ein Weiterbetrieb des Planarantriebssystems, zumindest bis alle Läufer in einen sicheren Betriebszustand überführt sind, erreicht werden.

In einer beispielhaften Ausführungsform des Planarantriebssystems, die nicht zur Erfindung gehört, kann die aktive Sicherheitsvorrichtung ein Halteelement umfassen. Der Läufer wird im zweiten Betriebszustand derart an das Halteelement geführt, dass der Läufer hinsichtlich seiner Bewegbarkeit durch das Halteelement eingeschränkt ist. Dies kann insbesondere mit der unterbrechungsfreien Stromversorgung kombiniert werden und der Läufer zunächst zum Halteelement bewegt werden und anschließend dort mittels des Halteelements festgesetzt werden. Nun ist keine weitere Bestromung der Spulengruppen mehr nötig, um den Läufer am Planarantriebssystem zu halten und gegebenenfalls kann nun kontrolliert die Bestromung der Spulengruppen abgeschaltet werden, wenn alle Läufer gesichert sind.

Im erfindungsgemäßen Planarantriebssystem umfasst die aktive Sicherheitsvorrichtung eine erste bewegliche Barriere zwischen einem ersten Bereich der Statorfläche und einem zweiten Bereich der Statorfläche. Der Läufer kann nach einem Schließen der ersten beweglichen Barriere nicht mehr vom ersten Bereich in den zweiten Bereich bewegt werden. Die erste bewegliche Barriere kann dabei beispielsweise eine Tür umfassen, die auf die Statorfläche abgesenkt werden kann.

Im erfindungsgemäßen Planarantriebssystem umfasst die aktive Sicherheitsvorrichtung eine zweite bewegliche Barriere zwischen dem ersten Bereich und einem Rand des Planarantriebssystems. Die zweite bewegliche Barriere kann nur geöffnet werden, wenn die erste bewegliche Barriere geschlossen ist. Dies ermöglicht beispielsweise einen Eingriff durch einen Bediener des Planarantriebssystems nur dann, wenn sich der Läufer im durch die erste bewegliche Barriere gesicherten ersten Bereich befindet und die erste bewegliche Barriere geschlossen ist, sodass weitere Läufer aus dem zweiten Bereich nicht in den ersten Bereich gelangen können und so während des Eingriffs des Bedieners eine Gefährdung des Bedieners verringert oder vermieden werden kann. Der Eingriff des Bedieners kann dabei beispielsweise ein Beladen und/oder ein entladen des Läufers umfassen.

Im erfindungsgemäßen Planarantriebssystems kann die zweite bewegliche Barriere nur geöffnet werden, wenn die Antriebsspulen der Statoreinheiten im ersten Bereich stromlos geschaltet sind. Dies ermöglicht eine weitere Verbesserung der Sicherheit, da auch Läufer im ersten Bereich nicht weiterbewegt werden können.

In einer Ausführungsform des erfindungsgemäßen Planarantriebssystems umfasst die erste bewegliche Barriere einen Niederhalter, wobei beim Schließen der ersten Barriere der Niederhalter den Läufer auf der Statorfläche fixiert. Dies ermöglicht eine weitere Verbesserung der Sicherheit, da eine Bewegung des Läufers weiter erschwert wird.

In einer Ausführungsform des erfindungsgemäßen Planarantriebssystems umfasst die aktive Sicherheitsvorrichtung eine dritte bewegliche Barriere mit einer Doppelschiene. Diese kann gesteuert werden und eine Bewegung des Läufers einschränken, sodass eine Sicherheit weiter erhöht werden kann.

In einer beispielhaften Ausführungsform des Planarantriebssystems, die nicht zur Erfindung gehört, kann die aktive Sicherheitsvorrichtung einen unterhalb der Statorfläche angeordneten Fluidraum umfassen. Der Fluidraum kann mit einem Ferrofluid gefüllt werden, wobei bei Füllung des Fluidraumes mit dem Ferrofluid der Läufer hinsichtlich seiner Bewegbarkeit parallel und senkrecht zur Statorfläche aufgrund einer magnetischen Wechselwirkung des Ferrofluids mit den Magneteinheiten eingeschränkt ist. Das Ferrofluid kann beispielsweise Eisenatome beinhalten. Der Fluidraum kann als Kavität, Behälter, Tank, Leitungssystem oder Flutungsraum ausgestaltet sein.

In einer erfindungsgemäßen Ausführungsform des Planarantriebssystems ist eine Steuereinheit eingerichtet die aktive Sicherheitsvorrichtung anzusteuern. Ein Betriebsverfahren für das Planarantriebssystem kann dann beinhalten, die aktive Sicherungsvorrichtung zu steuern.

In einer beispielhaften Ausführungsform des Planarantriebssystems, die nicht zur Erfindung gehört, kann eine Planarantriebssystemsteuereinheit eingerichtet sein, eine Bestromung der Spulengruppen der Statoreinheiten zu steuern, und zu erkennen, dass sich das Planarantriebssystem im zweiten Betriebszustand befindet. Die Planarantriebssystemsteuereinheit ist ferner eingerichtet, die Bestromung der Spulengruppen der Statoreinheiten derart vorzunehmen, dass das Planarantriebssystem vom zweiten Betriebszustand in den ersten Betriebszustand überführt wird. Die Steuereinheit und die Planarantriebssystemsteuereinheit können dabei als gemeinsame Steuereinheit ausgestaltet sein.

Ein erfindungsgemäßes Verfahren zum Betreiben eines Planarantriebssystems beinhaltet, dass die Steuerein-die aktive Sicherheitsvorrichtung derart Ansteuern, dass das Planarantriebssystem vom zweiten Betriebszustand in den ersten Betriebszustand überführt wird.

Die Erfindung wird anhand der beigefügten Figuren näher erläutert. Hierbei zeigen:
- Fig. 1: eine isometrische Ansicht eines Planarantriebssystems;
- Fig. 2: eine Seitenansicht des Planarantriebssystems der Fig. 1;
- Fig. 3: eine Seitenansicht eines Planarantriebssystems;
- Fig. 4: eine Seitenansicht eines Planarantriebssystems;
- Fig. 5: eine Draufsicht von unten auf das Planarantriebssystem der Fig. 4;
- Fig. 6: eine Seitenansicht eines Planarantriebssystems;
- Fig. 7: eine Draufsicht auf ein Planarantriebssystem;
- Fig. 8: eine Seitenansicht eines Planarantriebssystems;
- Fig. 9: eine Seitenansicht des Planarantriebssystems des Fig. 8;
- Fig. 10: eine Seitenansicht eines Planarantriebssystems;
- Fig. 11: eine Seitenansicht eines Planarantriebssystems;
- Fig. 12: eine Seitenansicht eines Planarantriebssystems;
- Fig. 13: eine Seitenansicht eines erfindungsgemäßen Planarantriebssystems:
- Fig. 14: eine weitere Seitenansicht des erfindungsgemäßen Planarantriebssystems der Fig. 13;
- Fig. 15: eine Seitenansicht eines erfindungsgemäßen Planarantriebssystems;
- Fig. 16: eine Seitenansicht eines Planarantriebssystems;
- Fig. 17: eine Seitenansicht eines Planarantriebssystems; und
- Fig. 18: ein Ablaufdiagramm eines Betriebsverfahrens.

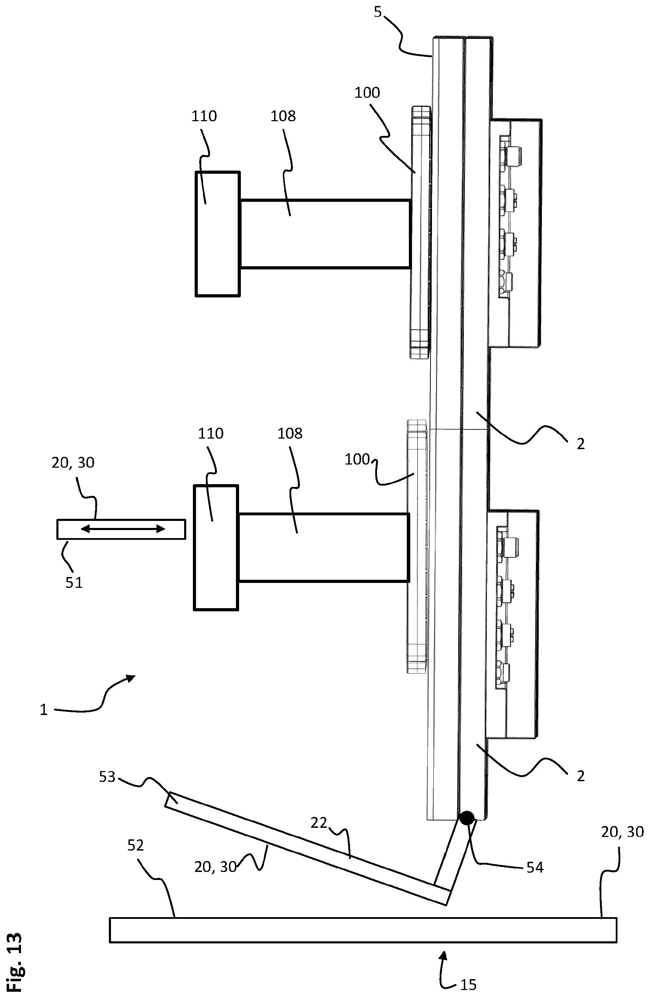

Nur in den Figuren 13-15 ist ein erfindungsgemäßes Planarantriebssystem dargestellt.

Im Folgenden können für gleiche Merkmale gleiche Bezugszeichen verwendet werden. Weiter kann es aus Gründen der Übersichtlichkeit vorgesehen sein, dass nicht in jeder Figur sämtliche Elemente gezeigt sind. Weiter kann es der Übersicht halber vorgesehen sein, dass nicht in jeder Zeichnung jedes Element mit einem eigenen Bezugszeichen versehen ist.

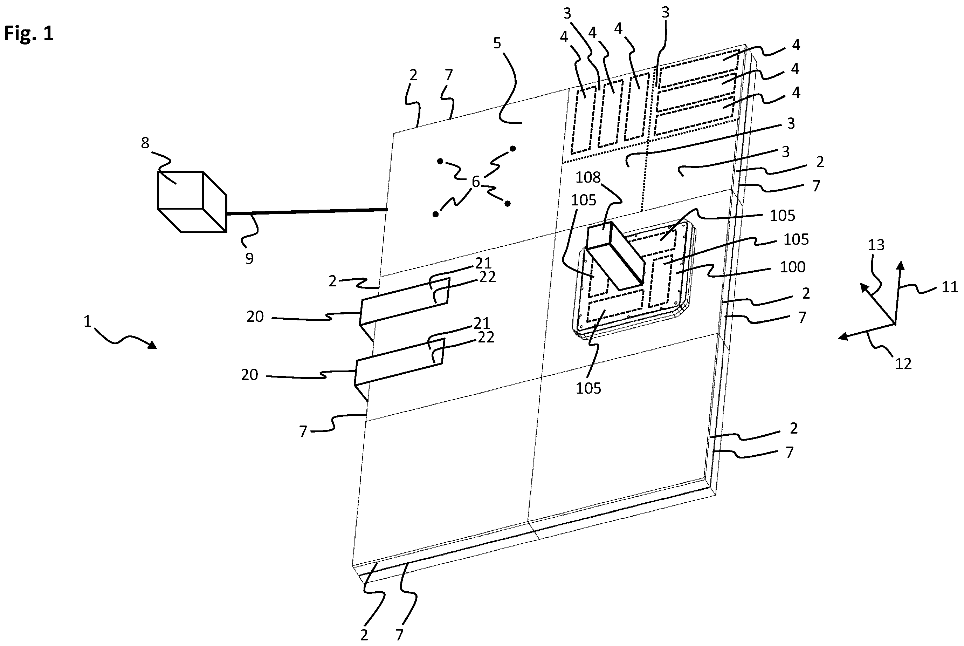

Figur 1 zeigt ein Planarantriebssystem 1 mit sechs Statormodulen 2, wobei die Statormodule 2 derart angeordnet sind, dass ein Rechteck von zwei auf drei Statormodulen 2 gebildet ist. Auch andere Anordnungen der Statormodule 2 sind denkbar, es können auch mehr oder weniger als sechs Statormodule 2 angeordnet werden. Im oben rechts dargestellten Statormodul 2 ist ein Innenleben des Statormoduls 2 skizziert, wobei das Statormodul 2 vier Statoreinheiten 3 umfasst, wobei die vier Statoreinheiten 3 innerhalb eines Statormoduls 2 in einer quadratischen zwei-auf-zwei-Anordnung angeordnet sind. Ferner ist für zwei Statoreinheiten 3 dargestellt, dass die Statoreinheiten 3 Spulenanordnungen 4 umfassen, wobei die Spulenanordnungen 4 mit unterschiedlicher Ausrichtung dargestellt sind. Die Spulenanordnungen 4 dienen zum Erzeugen eines Statormagnetfelds. Die Spulenanordnungen 4 sind in der dargestellten Ausführungsform als rechteckige und längsgestreckte Spulenanordnungen 4 ausgestaltet. In jeder Statoreinheit 3 der Statormodule 2 sind jeweils drei einzelne, rechteckige und längsgestreckte Spulen einer Spulenanordnung 4 dargestellt. Ebenso könnte bei einer nicht dargestellten Ausführungsform eine andere Anzahl an einzelnen rechteckigen und längsgestreckten Spulen eine Spulenanordnung 4 bilden. Dabei orientiert sich ihre Längserstreckung parallel zu einer der Kanten der jeweiligen Statoreinheit 2. Unterhalb jeder der dargestellten Spulenanordnung 4 sind weitere Spulen vorhanden, die in Bezug auf ihre Längserstreckung eine um 90° gedrehte Orientierung aufweisen. Dieses Raster aus längserstreckten und rechteckigen Spulen einer Spulenanordnung 4 kann mehrfach übereinander ausgebildet sein. Real sind weder Statoreinheiten 3 noch Spulenanordnungen 4 sichtbar, da sie durch ein Statormodulgehäuse 7 des Statormoduls 2 umgeben sind. Die sechs Statormodule 2 bilden eine zusammenhängende Statorfläche 5 oberhalb der Statoreinheiten 3. Ferner ist ein Läufer 100 angeordnet, wobei der Läufer eine Mehrzahl von Magneteinheiten 105 zum Erzeugen eines Läufermagnetfelds aufweist. Die Spulenanordnungen 4 können bei entsprechender Bestromung mit den Magneteinheiten 105 wechselwirken und dadurch den Läufer 100 innerhalb des Planarantriebssystems 1 oberhalb der Statorfläche 5 bewegen. Durch die Statorfläche 5 ist also eine Bewegungsebene für den Läufer 100 definiert. Die Darstellung in Figur 1 ist vereinfacht, da in jeder Statoreinheit 3 mehrere Spulenanordnungen 4 angeordnet sind, die jeweils im 90° Winkel zueinanderstehen, jedoch nur jeweils eine Lage von Spulenanordnungen 4 dargestellt ist. Die Magneteinheiten 105 sind innerhalb des Läufers 100 umlaufend angeordnet und können jeweils mit den Spulenanordnungen 4 wechselwirken, um den Läufer 100 zu bewegen. Die Bewegungen des Läufers können dabei insbesondere in einer durch eine erste Richtung 11 und eine zweite Richtung 12 aufgespannte Ebene parallel zur Statorfläche 5 erfolgen. Ferner ist eine Überlagerung dieser Bewegungen möglich, sodass der Läufer 100 in alle Richtungen parallel zur Statorfläche 5 bewegt werden kann. Die Anordnung von vier Statoreinheiten 3 innerhalb eines Statormoduls 2 entspricht den von der Anmelderin unter dem Namen XPlanar vertriebenen Statormodulen 2 für ein Planarantriebssystem 1. Es kann alternativ vorgesehen, auch mehr oder weniger Statoreinheiten 3 innerhalb eines Statormoduls 2 anzuordnen. Beispielsweise kann jedes Statormodul 2 nur eine Statoreinheit 3 umfassen oder mehr als vier Statoreinheiten 3 umfassen.

Ebenfalls in Figur 1 dargestellt ist eine Planarantriebssystemsteuereinheit 8, die mit einem der Statormodule 2 mittels einer Datenleitung 9 verbunden ist. Dabei kann vorgesehen sein, dass die Statormodule 2 Kommunikationssignale untereinander weitergeben können. Alternativ kann auch jedes Statormodul 2 mit der Planarantriebssystemsteuereinheit 8 verbunden sein (nicht in Figur 1 gezeigt). Die Planarantriebssystemsteuereinheit 8 ist eingerichtet, Steuerbefehle an die Statormodule 2 auszugeben, wobei die Statormodule 2 eingerichtet sind, die Spulenanordnungen 4 anhand der Steuersignale zu bestromen und dadurch eine Bewegung des Läufers 100 parallel zur Statorfläche 5 zu steuern. Die Spulenanordnungen 4 können ferner derart bestromt werden, dass der Läufer 100 senkrecht zur Statorfläche 5 in einer dritten Richtung 13 bewegt wird. Zusätzlich kann vorgesehen sein, die Spulenanordnungen 4 ferner derart bestromt werden, dass der Läufer 100 um eine Rotationsachse senkrecht zur Statorfläche 5 rotiert oder um eine Kippachse parallel zur Statorfläche 5 gekippt wird.

Weiter in Figur 1 dargestellt sind Magnetfeldsensoren 6 in einem der Statormodule 2, wobei die anderen Statormodule 2 ebenfalls Magnetfeldsensoren 6 aufweisen können. Mittels der Magnetfeldsensoren 6 kann eine Position des Läufers 100 bestimmt und an die Planarantriebssystemsteuereinheit 8 weitergegeben werden. Die Magnetfeldsensoren 6 können beispielsweise als Hall-Sensoren, insbesondere als 3D-Hall-Sensoren, ausgestaltet sein. Alternativ können auch Rohdaten der Magnetfeldsensoren 6 an die Planarantriebssystemsteuereinheit 8 weitergegeben und eine Position des Läufers 100 durch die Planarantriebssystemsteuereinheit 8 bestimmt werden.

Das in Figur 1 gezeigte Planarantriebssystem 1 kann in der Automatisierungstechnik, insbesondere der Fertigungstechnik, der Handhabungstechnik und der Verfahrenstechnik, eingesetzt werden, um Objekte zu transportieren. Dabei können die Objekte beispielsweise auf dem Läufer 100 angeordnet sein. Hierzu weist der Läufer 100 einen Objekthalter 108 auf.

Das Planarantriebssystem 1 weist ferner ein Sicherheitssystem 20 auf. In einem ersten Betriebszustand ist der Läufer 100 oberhalb der Statorfläche 5 mittels einer Wechselwirkung des Statormagnetfelds mit dem Läufermagnetfeld parallel zur Statorfläche 5 bewegbar. In einem zweiten Betriebszustand ist der Läufer 100 hinsichtlich seiner Bewegbarkeit parallel zur Statorfläche 5 und senkrecht zur Statorfläche 5 durch das Sicherheitssystem 20 zumindest eingeschränkt. Das Sicherheitssystem 20 ist in diesem Ausführungsbeispiel als passive Sicherheitsvorrichtung 21 ausgestaltet und weist eine oberhalb der Statorfläche 5 angeordnete Doppelschiene 22 auf. Die passive Sicherheitsvorrichtung 21 ist dabei an einem der Statormodule 2 angebracht. Die Doppelschiene 22 ist derart ausgestaltet, dass der Objekthalter 108 des Läufers 100 zwischen die Doppelschiene 22 geführt werden kann und der Läufer 100 dann unterhalb der Doppelschiene 22 angeordnet ist.

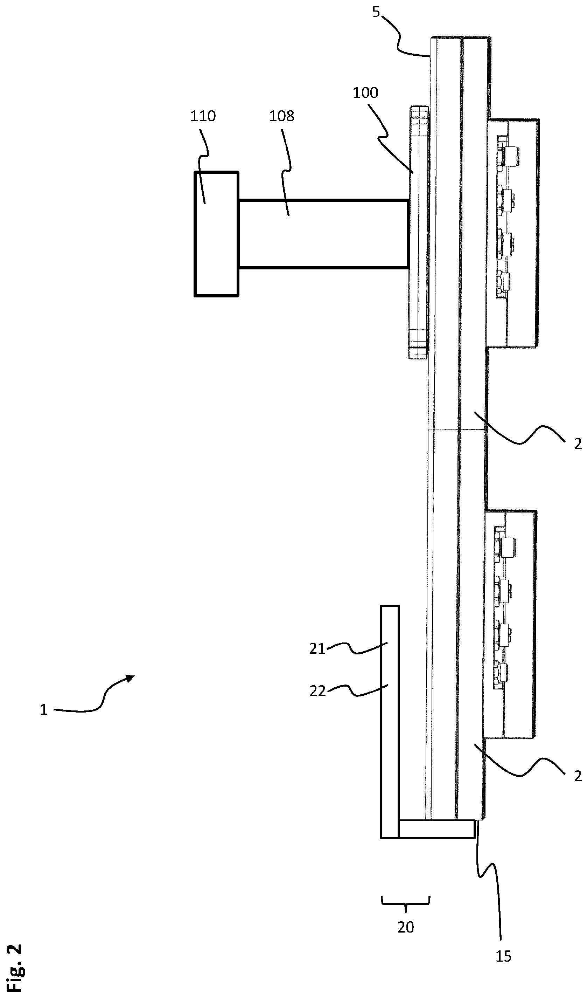

Figur 2 zeigt eine Seitenansicht des Planarantriebssystems 1 der Figur 1. Zusätzlich ist ein Objekt 110 dargestellt, welches am Objekthalter 108 des Läufers 100 angeordnet ist. Im ersten Betriebszustand kann der Läufer 100 oberhalb der Statorfläche 5 bewegt werden, nicht jedoch im Bereich der passiven Sicherheitsvorrichtung 21 beziehungsweise Doppelschiene 22. Somit ist der Läufer 100 im ersten Betriebszustand nicht durch die passive Sicherheitsvorrichtung 21 beziehungsweise Doppelschiene 22 in seiner Bewegbarkeit eingeschränkt. Soll das Objekt 110 vom Läufer 100 entfernt werden oder auf den Läufer 100 aufgesetzt werden, kann das Planarantriebssystem in den zweiten Betriebszustand überführt werden. Dazu wird der Läufer 100 unter die Doppelschiene 22 bewegt. Das Objekt 110 ist dabei auf einer dem Läufer 100 gegenüberliegenden Seite der Doppelschiene 22 angeordnet. Ein Abstand der Doppelschiene 22 ist dabei so bemessen, dass Objekthalter 108 in diesem Bereich angeordnet werden kann. Der Läufer 100 ist zwischen der Statorfläche 5 und der Doppelschiene 22 angeordnet. Dadurch wird bei einer Entnahme des Objekts 110 nach links beziehungsweise oben für den Fall, dass sich das Objekt 110 nicht vom Objekthalter 108 lösen lässt, der Läufer 100 von der Doppelschiene 22 zurückgehalten und kann nicht unbeabsichtigt vom Planarantriebssystem 1 entfernt werden. Dadurch kann ein Bediener des Planarantriebssystems 1 den Läufer 100 nicht unbeabsichtigt vom Planarantriebssystem 1 entfernen. Durch diesen Entnahmeschutz kann sichergestellt sein, dass Bediener keine Verletzungen durch die Magneteinheiten 105 des Läufers 100 erfahren können und beispielsweise Quetschungen zwischen dem Läufer 100 und anderen Gegenständen, insbesondere bestehend aus Stahl, verhindert werden. Gleiches gilt auch für den Fall, dass das Objekt 110 maschinell entnommen werden soll. Dadurch wird eine Sicherheitserhöhung erreicht.

Der Objekthalter 108 kann flexibel, also biegbar, ausgestaltet sein. Dies kann ermöglichen, dass ein Bediener, der eine Hand in die Bewegungsbahn des Läufers führt, keinen Schaden durch den Aufprall des Läufers 100, des Objekthalters 108 oder des Objekts 110 erleidet.

Die passive Sicherheitsvorrichtung 21 kann dabei an einem Rand 15 des Planarantriebssystems 1 angeordnet sein. Ferner kann vorgesehen sein, dass die passive Sicherheitsvorrichtung 21 mehr als eine Doppelschiene 22 beinhaltet, wobei die Doppelschienen 22 wie im Zusammenhang mit den Figuren 1 und 2 erläutert aufgebaut sein können und wobei dann mehrere Läufer 100 gleichzeitig beladen und entladen werden können.

Die weiteren Figuren enthalten gegebenenfalls die im Zusammenhang mit dem Figuren 1 und 2 erläuterten Bezugszeichen. In der weiteren Beschreibung wird gegebenenfalls auf diese Bezugszeichen nicht weiter eingegangen, da die mit diesen Bezugszeichen beschriebenen Teile des Planarantriebssystems 1 im Zusammenhang mit den Figuren 1 und 2 erläutert wurden.

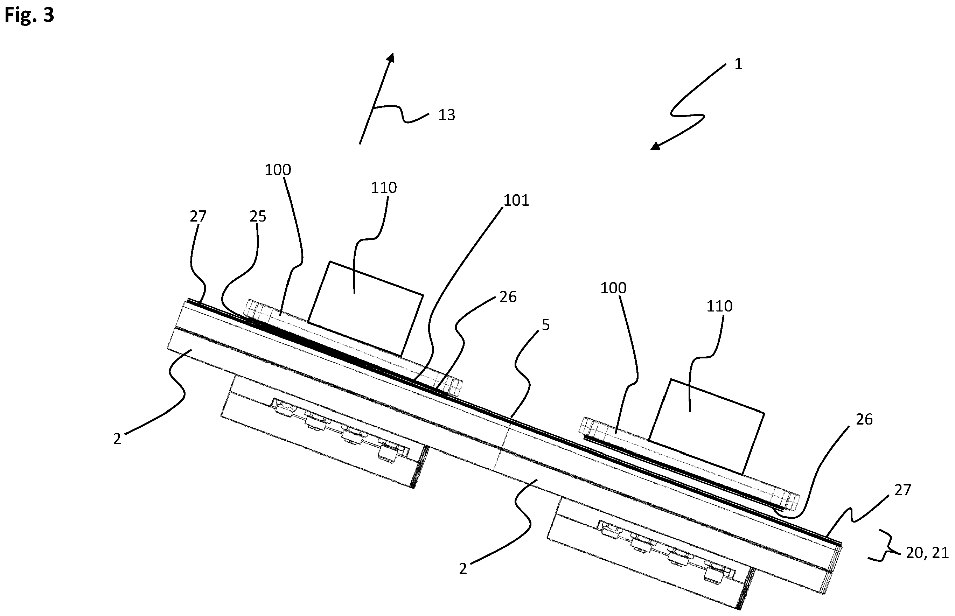

Figur 3 zeigt eine Seitenansicht eines Planarantriebssystems 1, bei dem ebenfalls ein Sicherheitssystem 20 in Form einer passiven Sicherheitsvorrichtung 21 vorgesehen ist. Es sind zwei Statormodule 2 gezeigt, wobei die Statormodule 2 derart angeordnet sind, dass die Statorfläche 5 nicht waagerecht, sondern schräg angeordnet ist. Oberhalb eines jeden Statormoduls 2 ist ein Läufer 100 angeordnet. Würde nun die elektrische Versorgung für das gesamte Planarantriebssystem 1 oder für eines der Statormodule 2 ausfallen, so könnten die Läufer 100 gegebenenfalls die Statorfläche 5 entlang nach unten rutschen und dabei eine Gefahr für einen Bediener oder für ein transportiertes Objekt 110 darstellen.

In Figur 3 ist angedeutet, dass die elektrische Versorgung für das linke der Statormodule 2 ausgefallen ist und deshalb eine Bestromung der Spulengruppen 4 dieses Statormoduls 2 nicht möglich ist. Der darüber angeordnete Läufer 100 hat sich folglich in Richtung des Statormoduls 2 bewegt. Die passive Sicherheitsvorrichtung 21 umfasst eine Klettverbindung 25 zwischen der Statorfläche 5 und dem Läufer 100. Hierzu weist der Läufer 100 einen ersten Klettstreifen 26 und die Statorfläche 5 einen zweiten Klettstreifen 27 auf. Durch die zwischen dem ersten Klettstreifen 26 und dem zweiten Klettstreifen 27 gebildete Klettverbindung 25 wird also ein Abrutschen des Läufers 100 verhindert oder zumindest erschwert. Dabei kann vorgesehen sein, dass der erste Klettstreifen 26 ein Hakenband und der zweite Klettstreifen 27 ein Flauschband umfasst. Ferner kann auch der erste Klettstreifen 26 ein Flauschband und der zweite Klettstreifen 27 ein Hakenband umfassen. Ferner ist auch anstelle des Flauschbands ein Velourband für den ersten Klettstreifen 26 beziehungsweise den zweiten Klettstreifen 27 möglich. Alternativ kann das Hakenband durch ein Pilzkopfband ersetzt werden. In einer Ausgestaltung umfasst sowohl der erste Klettstreifen 26 als auch der zweite Klettstreifen 27 ein Pilzkopfband. Der erste Klettstreifen 26 kann dabei insbesondere flächig auf einer Unterseite 101 des Läufers 100 angeordnet sein und einen Großteil (mehr als 75 Prozent) der Unterseite 101 oder die komplette Unterseite 101 bedecken. Der zweite Klettstreifen 27 kann dabei insbesondere flächig auf der Statorfläche 5 angeordnet sein und einen Großteil (mehr als 75 Prozent) der Statorfläche 5 oder die komplette Statorfläche 5 bedecken. Ferner kann vorgesehen sein, dass der zweite Klettstreifen 27 nur in schrägen Bereichen der Statorfläche 5 angeordnet ist.

Im zweiten Betriebszustand ist der Läufer 100 also mittels der Klettverbindung 25 an der Statorfläche 5 befestigt. Dies gilt in der Darstellung der Fig. 3 jedoch nur für einen der beiden Läufer 100, da der andere Läufer 100 nicht auf der Statorfläche 5 aufliegt. Dies kann insbesondere dann der Fall sein, wenn nur für ein Statormodul 2 die Bestromung der Spulengruppen 4 nicht möglich ist. Der nicht auf der Statorfläche 5 aufliegende Läufer 100 befindet sich dann weiter im ersten Betriebszustand und kann oberhalb der Statorfläche 5 bewegt werden.

Um den Läufer 100 wieder von der Statorfläche 5 zu lösen, wenn eine Bestromung der Spulengruppen 4 wieder möglich ist, kann vorgesehen sein, dass die Spulengruppen 4 derart bestromt werden, dass der Läufer 100 aufgrund einer Wechselwirkung des Läufermagnetfelds und des Statormagnetfelds von der Statorfläche 5 wegbewegt wird. Um dies zu unterstützen, kann ferner vorgesehen sein, den Läufer 100 um einen vorgegebenen Winkel um eine Achse parallel zur dritten Richtung 13 zu rotieren, da sich so die Klettverbindung 25 leichter lösen lassen kann. Dabei kann ferner vorgesehen sein, dass nach einem wieder anlaufen des Planarantriebssystems 1 oder des Statormoduls 2 mittels der Magnetfeldsensoren 6 ermittelt wird, an welchen Positionen Läufer 100 mittels Klettverbindung 25 an der Statorfläche 5 angeordnet sind. Eine Steuerung der Bestromung der Spulengruppen 4 kann dabei mittels der Planarantriebssystemsteuereinheit 8 erfolgen.

Alternativ zur Darstellung der Fig. 3 können statt des ersten Klettstreifens 26 und des zweiten Klettstreifens 27 auch am Läufer 100 und/oder an der Statorfläche 5 eine Anti-Rutsch-Matte, beispielsweise aus Gummi oder Moosgummi angeordnet sein, wobei dadurch ein Abrutschen des Läufers 100 ebenfalls verhindert werden kann.

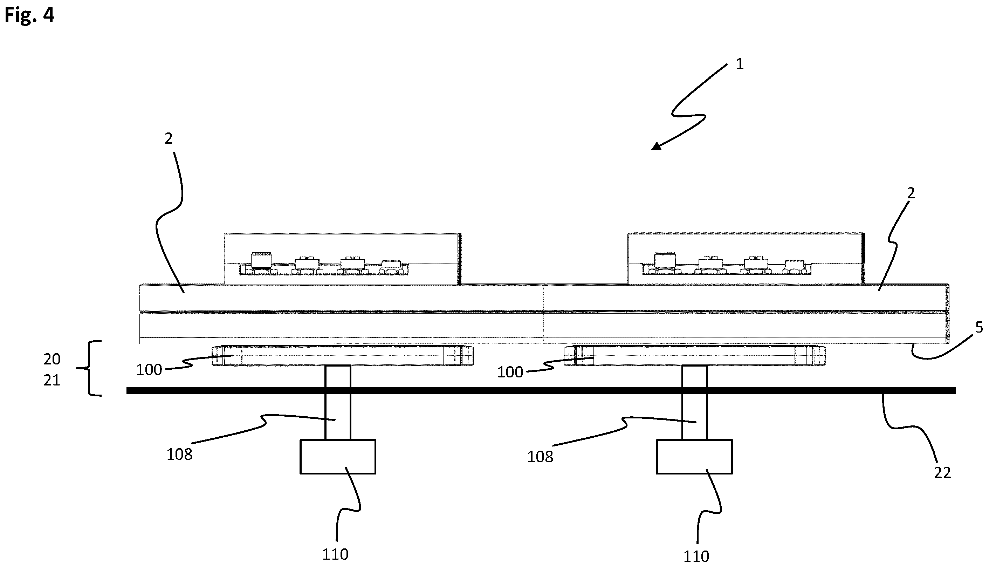

Figur 4 zeigt eine Seitenansicht eines Planarantriebssystems 1, welches ebenfalls ein Sicherheitssystem 20 in Form einer passiven Sicherheitsvorrichtung 21 aufweist. Die passive Sicherheitsvorrichtung 21 erschwert bei einem Ausfall der Bestromung der Spulengruppen 4 eine daraus resultierende Entfernung des Läufers 100 von der Statorfläche 5. Das Planarantriebssystem 1 weist eine Einbaulage auf, in der die Statorfläche 5 waagerecht angeordnet ist, die Läufer 100 aber bezogen auf den Erdmittelpunkt unterhalb der Statorfläche 5 angeordnet sind. Bei einem Ausfall der Bestromung würden sich die Läufer 100 also unkontrolliert von der Statorfläche 5 entfernen und könnten dabei Personen und auch die mittels Objekthalter 108 an den Läufern 100 befestigten Objekte 110 gefährden. Mittels der passiven Sicherheitsvorrichtung 21 kann das Risiko der Gefährdung einer Person oder der Beschädigung eines Objekts 110 jeweils vermindert oder gegebenenfalls sogar vollständig verhindert werden.

Die passive Sicherheitsvorrichtung 21 ist in Form einer Doppelschiene 22 ausgeführt, wobei die Objekthalter 108 jeweils so in Zwischenräumen der Doppelschiene 22 geführt sind, dass der Läufer 100 nur bis zur Doppelschiene 22 und nicht darüber hinaus bewegt werden kann. Auch hier sind die Objekte 110 und die Läufer 100 jeweils auf gegenüberliegenden Seiten der Doppelschienen 22 angeordnet. Die Läufer 100 sind zwischen der Statorfläche 5 und der Doppelschiene 22 angeordnet.

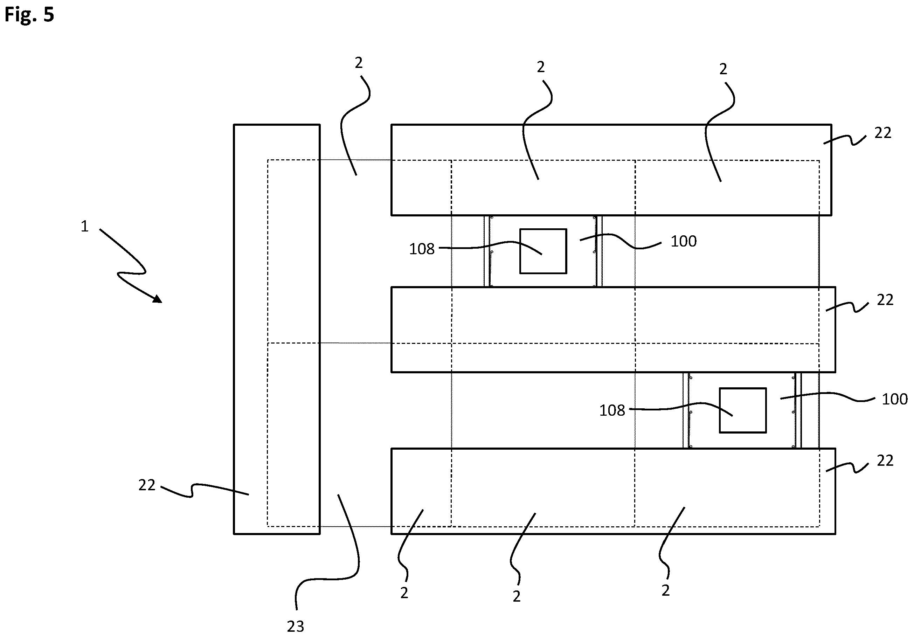

Figur 5 zeig eine Draufsicht von unten auf ein Planarantriebssystem 1, das wie im Zusammenhang mit Figur 4 erläutert ausgestaltet ist. Der Übersichtlichkeit halber wurden die Objekte 110 weggelassen, sodass deutlich wird, dass die Objekthalter 108 in den Zwischenräumen 23 der Doppelschienen 22 angeordnet sind. Die Zwischenräume 23 bilden dabei Fahrstraßen für die Läufer 100. Die Läufer 100 sind also nicht mehr frei über die Statorfläche 5 bewegbar, sondern die Anordnung der Doppelschienen 22 beziehungsweise Zwischenräume 23 muss bei der Planung der Bewegungstrajektorien der Läufer 100 berücksichtigt werden.

Wenn eine Bestromung einer oder mehrerer Statormodule 2 ausfällt, bewegt sich der Läufer 100 oder gegebenenfalls auch mehrere oder alle Läufer 100 aufgrund der Gravitation von der Statorfläche 5 weg und werden von der Doppelschiene 22 aufgefangen. Das Planarantriebssystem 1 befindet sich dann im zweiten Betriebszustand, indem eine Bewegung des Läufers 100 von der Statorfläche 5 weg von der Doppelschiene 22 verhindert und eine Bewegung des Läufers 100 parallel zur Statorfläche 5 von der Doppelschiene 22 zumindest erschwert wird aufgrund einer Reibung zwischen Läufer 100 und Doppelschiene 22. Es können ferner Reibelemente wie eine Lage Gummi auf den Doppelschienen 22 aufgebracht sein, um die Reibung entsprechend zu erhöhen. Das Planarantriebssystem 1 der Figuren 4 und 5 ist also derart angeordnet, dass bei einem Ausfall der Bestromung der Spulengruppen 4 der Läufer 100 aufgrund der Gravitation von der Statorfläche 5 entfernt und mittels der Doppelschiene 22 aufgefangen werden kann.

Wenn nun eine Stromversorgung wieder bereitsteht, kann das Planarantriebssystem 1 wieder in den ersten Betriebszustand versetzt werden. Dazu kann es vorgesehen sein, mittels der Magnetfeldsensoren 6 die Positionen der Läufer 100 zu bestimmen und zunächst die Spulengruppen 4 derart zu bestromen, dass die Läufer 100 von der Doppelschiene 22 weg und hin zur Statorfläche 5 angezogen werden. Sobald die Läufer 100 wieder oberhalb der Doppelschiene 22 angeordnet sind, kann zusätzlich eine Bewegung der Läufer 100 parallel zur Statorfläche 5 erfolgen. Eine Steuerung dieses Vorgangs kann von der Planarantriebssystemsteuereinheit 8 durchgeführt werden.

Ein Abstand zwischen der Statorfläche 5 und der Doppelschiene 22 kann dabei derart gewählt werden, dass sich die Magneteinheiten 105 maximal 5 Millimeter von der Statorfläche 5 wegbewegen, wenn der Läufer 100 auf der Doppelschiene 5 aufliegt. In diesem Fall sind die Magneteinheiten 105 noch im magnetischen Einflussbereich der Spulengruppen 4. Beispielsweise kann ein Abstand der Doppelschiene 22 von der Statorfläche aus einer Summe der bereits genannten 5 Millimeter und einer Dicke des Läufers 100 betragen, die beispielsweise zwischen 10 und 15 Millimeter ist. Der Abstand der Doppelschiene 22 von der Statorfläche 5 kann dann im Bereich zwischen 11 Millimeter und 20 Millimeter liegen, beispielsweise bei 14 Millimeter für 12 Millimeter dicke Läufer 100.

Die in den Figuren 1 bis 5 gezeigten Sicherheitssysteme 20 umfassen passive Sicherheitsvorrichtungen 21. Darunter wird insbesondere verstanden, dass diese ohne bewegliche Teile auskommen. Die Einschränkung des Läufers 100 in seiner Bewegbarkeit erfolgt also ohne bewegliche Teile, sondern durch fest installierte Elemente wie die Doppelschienen 22 und die Klettverbindungen 25.

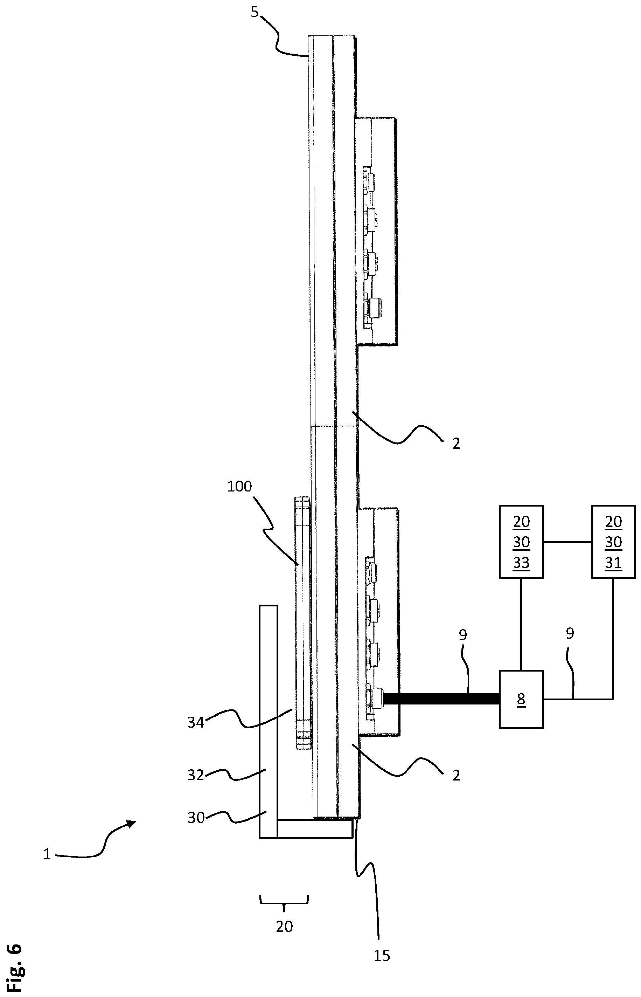

Figur 6 zeigt eine Seitenansicht eines Planarantriebssystems 1, welches ebenfalls ein Sicherheitssystem 20 aufweist. Das Planarantriebssystem 1 weist dabei eine Einbaulage auf, in der die Statorfläche 5 nicht waagerecht, sondern senkrecht ist. Für andere nicht waagerechte Einbaulagen kann das in Figur 6 gezeigte Sicherheitssystem 20 ebenfalls verwendet werden. Das Sicherheitssystem 20 umfasst dabei eine aktive Sicherheitsvorrichtung 30. Die aktive Sicherheitsvorrichtung 30 umfasst eine unterbrechungsfreie Stromversorgung 31, ein Halteelement 32 und eine Steuereinheit 33. Das Halteelement ist als Nothalttasche ausgestaltet. Wenn ein Strom ausfällt oder beispielsweise ein Not-AusSchalter des Planarantriebssystems 1 betätigt wird, ist das Planarantriebssystem 1 der Figur 6 eingerichtet, zunächst den Läufer 100 derart an das Halteelement 32 zu führen, dass der Läufer 100 hinsichtlich seiner Bewegbarkeit durch das Halteelement 32 eingeschränkt ist. Im vorliegenden Ausführungsbeispiel erfolgt dies durch eine Bewegung des Läufers 100 in die Nothalttasche 34 hinein. In der Nothalttasche 34 wird der Läufer 100 auch gehalten, wenn eine Stromversorgung der Statormodule 2 abgestellt wird und somit keine Wechselwirkung mehr zwischen dem Läufermagnetfeld und dem Statormagnetfeld besteht.

Die unterbrechungsfreie Stromversorgung 31 kann dazu genutzt werden, bei einem Ausfall der Stromversorgung noch für eine vorgegebene Zeitdauer Strom für die Bestromung der Spulengruppen 4 bereitzustellen, sodass alle Läufer 100 an entsprechende Haltemittel 32 geführt werden können. Sind die Läufer in dem Haltemittel 32, liegt der zweite Betriebszustand vor. Die Steuereinheit 33 kann eingerichtet sein, für eine Betriebssicherheit relevante Betriebsparameter, wie beispielsweise eine an der Planarantriebssystemsteuereinheit 8 anliegende Betriebsspannung, auszuwerten und das Planarantriebssystem 1 in den zweiten Betriebszustand zu überführen, wenn eine Auswertung der relevanten Betriebsparameter ergibt, dass ein unsicherer Betrieb, beispielsweise aufgrund fehlender oder unzureichender Betriebsspannung, vorliegen könnte.

In Figur 6 ist die Steuereinheit 33 außerhalb der Planarantriebssystemsteuereinheit 8 gezeigt. Die Steuereinheit 33 kann aber auch in die Planarantriebssystemsteuereinheit 8 integriert sein.

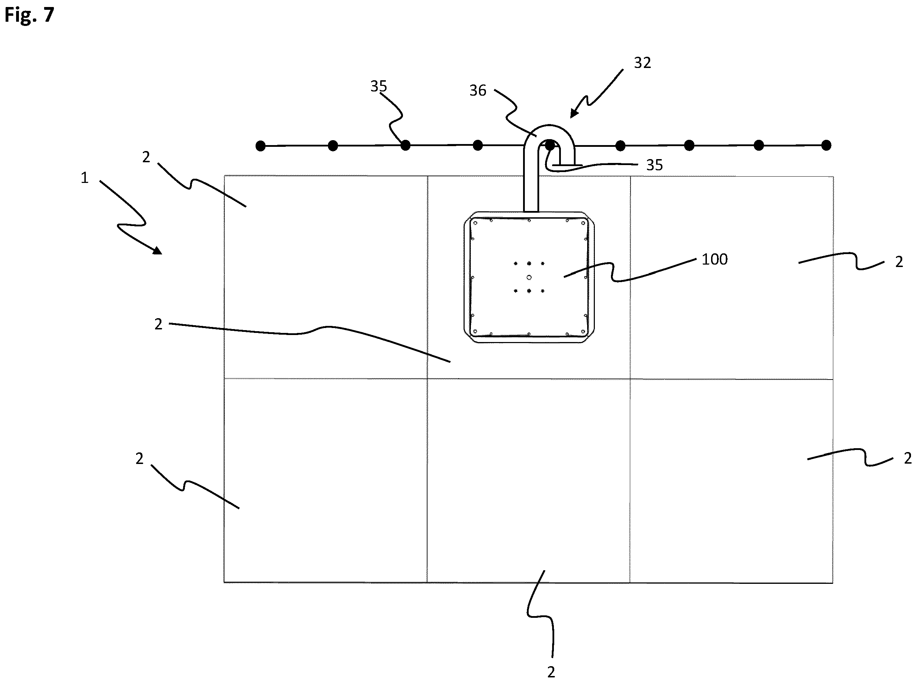

Figur 7 zeigt ein Planarantriebssystem 1, das insbesondere hinsichtlich der aktiven Sicherheitsvorrichtung 30 dem Planarantriebssystem 1 der Figur 6 entspricht, sofern im Folgenden keine Unterschiede beschrieben sind. Das Halteelement 32 weist keine Nothalttasche 34, sondern einen Stift 35, der oberhalb der Statormodule 2 angeordnet ist, und einen Haken 36, der am Läufer 100 angeordnet ist, auf. Um den Läufer 100 in seiner Bewegbarkeit einzuschränken kann der Haken 36 so zum Stift 35 geführt werden, dass der Läufer 100 mit dem Haken 36 am Stift 35 hängt und anschließend selbst bei einem Ausfall der Bestromung der Spulengruppen der Läufer 100 nicht mehr herunterfallen kann. Auch dies kann wieder mittels der unterbrechungsfreien Stromversorgung 31 und der Steuereinheit 33 analog zu Figur 6 gesteuert werden. Um eine möglichst große Flexibilität und insbesondere von jeder Position des Läufers 100 einen möglichst kurzen Verfahrweg von der Position des Läufers 100 zu einem Stift 35 zu gewährleisten, sind insbesondere eine Mehrzahl an Stiften 35 in bestimmten Abständen untereinander oberhalb der Statormodule 2 angeordnet. Der Abstand zwischen den einzelnen Stiften 35 ist dabei insbesondere so zu dimensionieren, dass der Haken 36 stets ungehindert zwischen zwei Stiften 35 hindurch bewegbar ist.

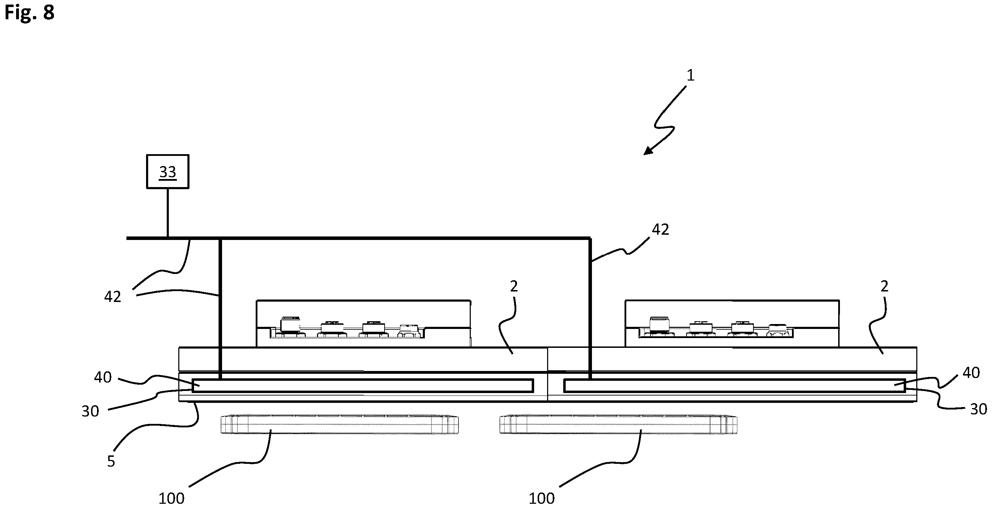

Figur 8 zeigt eine Seitenansicht eines Planarantriebssystems 1, bei dem die aktive Sicherheitsvorrichtung 30 einen unterhalb der Statorfläche 5 angeordneten Fluidraum 40 umfasst. Unterhalb der Statorfläche 5 soll dabei bedeuten, dass der Läufer 100 und der Fluidraum 40 auf verschiedenen Seiten der Statorfläche 5 angeordnet sind. Das Planarantriebssystem 1 weist eine Einbaulage auf, in der die Statorfläche 5 waagerecht angeordnet ist, die Läufer 100 aber bezogen auf den Erdmittelpunkt unterhalb der Statorfläche 5 angeordnet sind. Der Fluidraum 40 ist mit einer Zu- und Ableitung 42 verbunden, mittels denen ein Ferrofluid 41 aus einem nicht dargestellten Vorratsbehälter in den Fluidraum 40 förderbar ist.

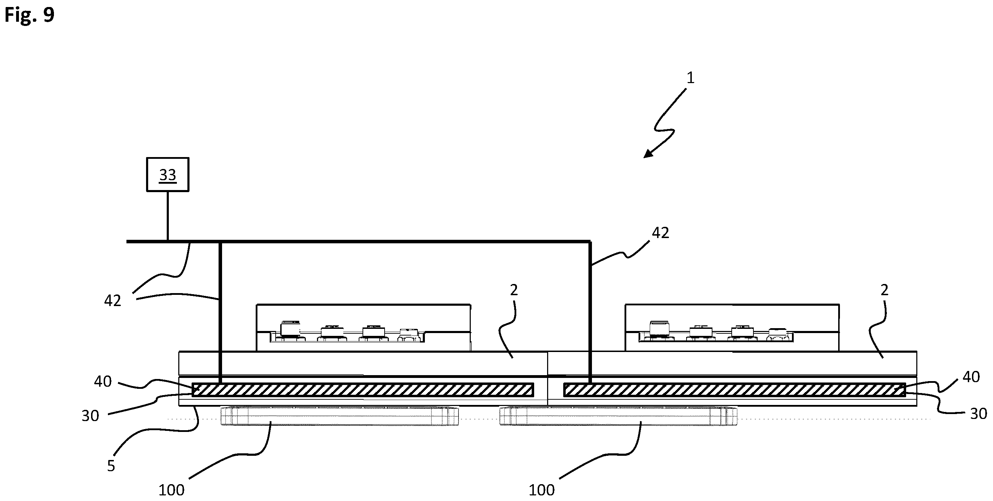

Figur 9 zeigt das Planarantriebssystem 1 der Figur 8, nachdem der Fluidraum 40 mit einem Ferrofluid 41 gefüllt wurde. Durch die Füllung des Fluidraumes 40 mit dem Ferrofluid 41 wird der Läufer 100 hinsichtlich seiner Bewegbarkeit parallel und senkrecht zur Statorfläche 5 aufgrund einer magnetischen Wechselwirkung des Ferrofluids 41 mit den Magneteinheiten 105 eingeschränkt. Die Läufer 100 werden an die Statorfläche 5 angezogen und bleiben dort haften, da eine Magnetkraft zwischen dem Ferrofluid 41 und den Magneteinheiten 105 hierfür ausreichend ist.

In Figur 8 ist das Planarantriebssystem 1 also im ersten Betriebszustand, in Figur 9 im zweiten Betriebszustand. Soll das Planarantriebssystem 1 vom zweiten in den ersten Betriebszustand überführt werden, kann das Ferrofluid 41 wieder über die Zu- und Ableitung 42 aus dem Fluidraum 40 entfernt werden. Das Füllen und das Entleeren des Fluidraumes 40 mit dem Ferrofluid 41 kann wiederum durch eine Steuereinheit 33 gesteuert werden.

Im Gegensatz zur Darstellung in den Figuren 8 und 9 kann auch eine Anordnung des Planarantriebssystems 1 derart vorgesehen sein, dass die Läufer 100 oberhalb der Statorfläche 5 angeordnet sind. Dies kann beispielsweise dem Entnahmeschutz dienen, wenn das Ferrofluid 41 beim Abschalten des Planarantriebssystems 1 im Fluidraum 40 verbleibt. Ferner kann dies auch dazu dienen, den Läufer 100 schnell bewegungslos an der Statorfläche 5 festzusetzen bei einem Ausfall der Stromversorgung.

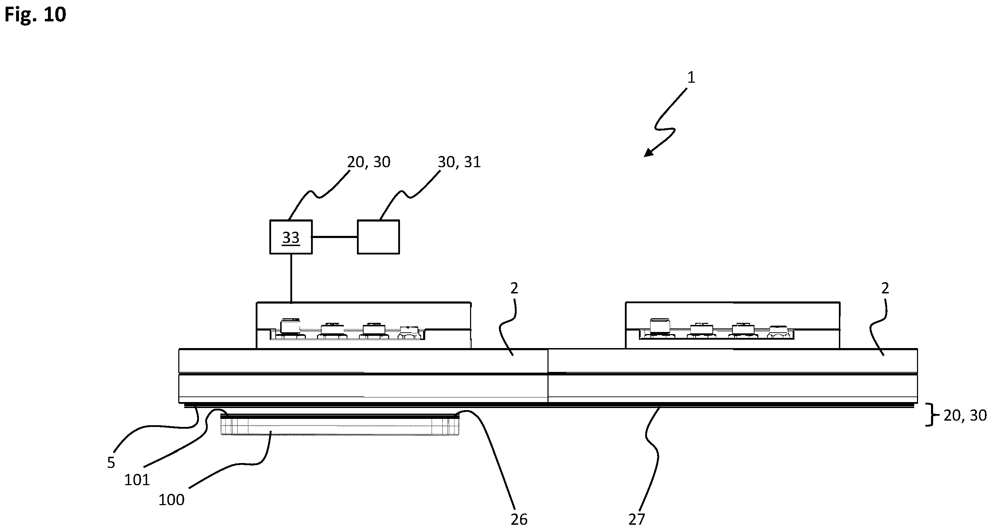

Figur 10 zeigt eine Seitenansicht eines Planarantriebssystems 1, bei dem die aktive Sicherheitsvorrichtung 30 eine Steuereinheit 33, eine unterbrechungsfreie Stromversorgung 31 und ein erstes Klettband 26 sowie ein zweites Klettband 27 umfasst. Das Planarantriebssystem 1 weist eine Einbaulage auf, in der die Statorfläche 5 waagerecht angeordnet ist, der Läufer 100 aber bezogen auf den Erdmittelpunkt unterhalb der Statorfläche 5 angeordnet ist. Das erste Klettband 26 ist am Läufer 100, das zweite Klettband 27 an der Statorfläche 5 angeordnet. Fällt nun ein Strom aus, kann dies dazu führen, dass der Läufer 100 nach unten fallen würde. Dies kann von der Steuereinheit 33 erkannt werden, wobei die Steuereinheit 33 eingerichtet sein kann, für eine Betriebssicherheit relevante Betriebsparameter wie beispielsweise eine Versorgungsspannung auszuwerten und das Planarantriebssystem 1 in den zweiten Betriebszustand zu überführen, wenn eine Auswertung der relevanten Betriebsparameter ergibt, dass ein unsicherer Betrieb vorliegen könnte. Dies erfolgt derart, dass die Spulengruppen 4 derart bestromt werden, dass der Läufer 100 hin zur Statorfläche 5 bewegt wird und zwischen dem ersten Klettband 26 und dem zweiten Klettband 27 eine zu Figur 3 analoge Klettverbindung 25 ausgebildet, die ein Herabfallen des Läufers 100 verhindern kann. Durch die Klettverbindung 25 ist also eine Bewegung des Läufers 100 parallel und senkrecht zur Statorfläche 5 zumindest erschwert. Zum Lösen der Klettverbindung 25 können ebenfalls die im Zusammenhang mit Figur 3 beschriebenen Methoden verwendet werden.

Dabei kann vorgesehen sein, dass der erste Klettstreifen 26 ein Hakenband und der zweite Klettstreifen 27 ein Flauschband umfasst. Ferner kann auch der erste Klettstreifen 26 ein Flauschband und der zweite Klettstreifen 27 ein Hakenband umfassen. Ferner ist auch anstelle des Flauschbands ein Velourband für den ersten Klettstreifen 26 beziehungsweise den zweiten Klettstreifen 27 möglich. Alternativ kann das Hakenband durch ein Pilzkopfband ersetzt werden. In einer Ausgestaltung umfasst sowohl der erste Klettstreifen 26 als auch der zweite Klettstreifen 27 ein Pilzkopfband. Der erste Klettstreifen 26 kann dabei insbesondere flächig auf der Unterseite 101 des Läufers 100 angeordnet sein und einen Großteil (mehr als 75 Prozent) der Unterseite 101 oder die komplette Unterseite 101 bedecken. Der zweite Klettstreifen 27 kann dabei insbesondere flächig auf der Statorfläche 5 angeordnet sein und einen Großteil (mehr als 75 Prozent) der Statorfläche 5 oder die komplette Statorfläche 5 bedecken.

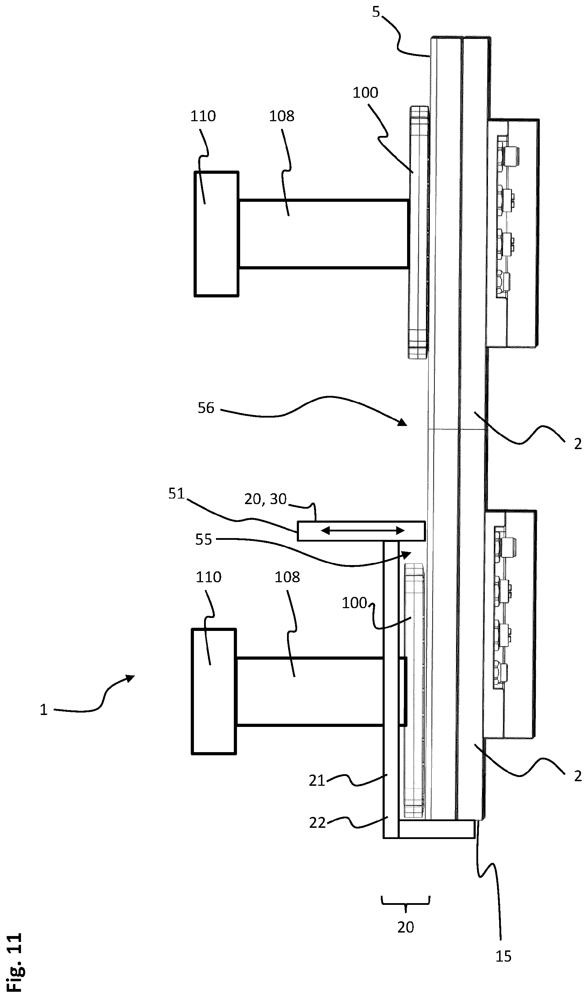

Figur 11 zeigt eine Seitenansicht eines Planarantriebssystems 1, bei dem eine aktive Sicherheitsvorrichtung 30 eine erste bewegliche Barriere 51 zwischen einem ersten Bereich 55 der Statorfläche 5 und einem zweiten Bereich 56 der Statorfläche 5 umfasst. Der Läufer 100 kann nach einem Schließen der ersten beweglichen Barriere 51 nicht mehr vom ersten Bereich 55 in den zweiten Bereich 56 bewegt werden. Dies kann der Sicherheit dienen, wenn ein auf einem Objekthalter 108 des Läufers 100 angeordnetes Objekt 110 entnommen werden soll. Ferner können aufgrund der ersten beweglichen Barriere 51 weitere Läufer 100 nicht mehr vom zweiten Bereich 56 in den ersten Bereich 55 gelangen, sodass eine Gefährdung durch weitere Läufer 100 während eines Be- oder Entladevorgangs verringert sein kann.

Hierzu kann vorgesehen sein, wie in Figur 11 dargestellt, dass ferner die im Zusammenhang mit den Figuren 1 und 2 beschriebene passive Sicherheitsvorrichtung 21 mit den Doppelschienen 22 im ersten Bereich 55 angeordnet ist. Somit kann eine weitere Sicherung erreicht werden. Ferner kann vorgesehen sein, dass die erste bewegliche Barriere 51 von einer Steuereinheit 33 gesteuert wird. Außerdem kann vorgesehen sein, nach der Einfahrt des Läufers 100 in den ersten Bereich 55 und dem Schließen der ersten beweglichen Barriere 51 die Antriebsspulen 4 im ersten Bereich 55 stromlos zu schalten und den Läufer 100 so auf der Statorfläche 5 aufzusetzen. Dadurch kann eine unbeabsichtigte Bewegung des Läufers 100 während einer Entnahme des Objekts vermieden werden.

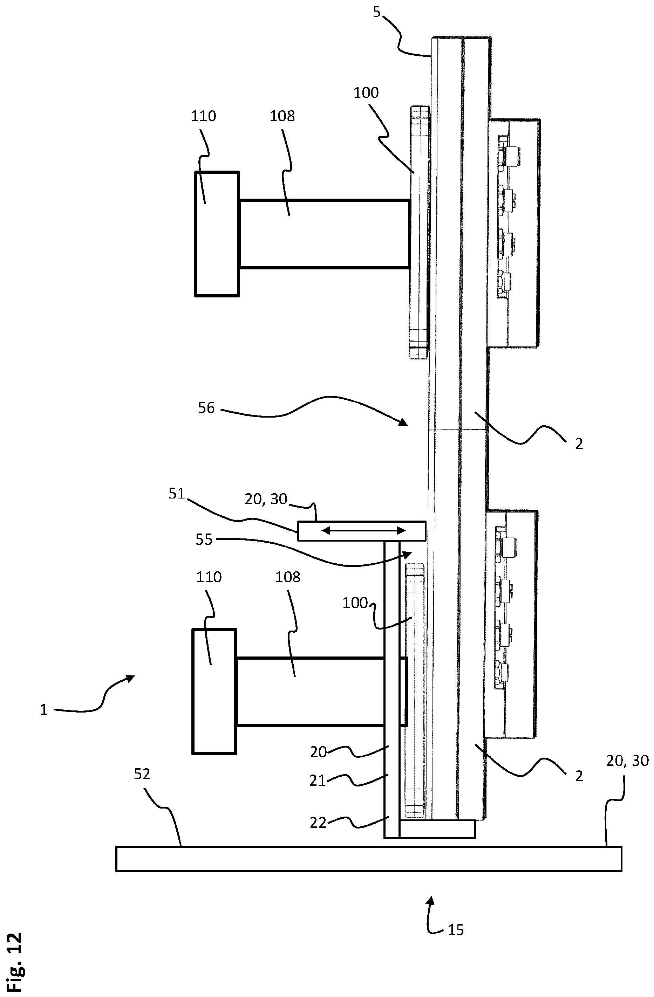

Figur 12 zeigt eine Seitenansicht eines Planarantriebssystems 1, das dem Planarantriebssystem 1 der Figur 11 entspricht, sofern im Folgenden keine Unterschiede beschrieben sind. Die aktive Sicherheitsvorrichtung 30 umfasst zusätzlich eine zweite bewegliche Barriere 52 zwischen dem ersten Bereich 55 und einem Rand 15 des Planarantriebssystems 1.Die zweite bewegliche Barriere 52 kann nur geöffnet werden, wenn die erste bewegliche Barriere 51 geschlossen ist. Dies kann beispielsweise mittels der Steuereinheit 33 gesteuert werden. Es kann ferner vorgesehen sein, dass die zweite bewegliche Barriere 52 nur geöffnet werden kann, wenn die Antriebsspulen 4 der Statoreinheiten 3 im ersten Bereich 55 stromlos geschaltet sind. Die zweite bewegliche Barriere 52 kann auch als Schutztür bezeichnet werden. Durch die zweite bewegliche Barriere 52 ist ein Bediener des Planarantriebssystems 1 beim Beladen des Läufers 100 mit einem Objekt 110 oder bei der Entnahme des Objekts 110 geschützt, da unkontrollierte Bewegungen des Läufers 100 vermieden werden können.

Figur 13 zeigt eine Seitenansicht eines Planarantriebssystems 1, das dem Planarantriebssystem 1 der Figur 12 entspricht, sofern im Folgenden keine Unterschiede beschrieben sind. Die Doppelschiene 22 ist in diesem Ausführungsbeispiel nicht Bestandteil einer passiven Sicherheitsvorrichtung 21, sondern ebenfalls Bestandteil der aktiven Sicherheitsvorrichtung 30 und als dritte bewegliche Barriere 53 ausgestaltet. Die dritte bewegliche Barriere 53 ist an einem Drehpunkt 54 drehbar gelagert. In Figur 13 ist die dritte bewegliche Barriere 53 in einer geöffneten Position dargestellt. Wird ein Läufer nun in Richtung des Rands 15 des Planarantriebssystems 1 bewegt, können anschließend die erste bewegliche Barriere 51 und die dritte bewegliche Barriere 53 geschlossen werden.

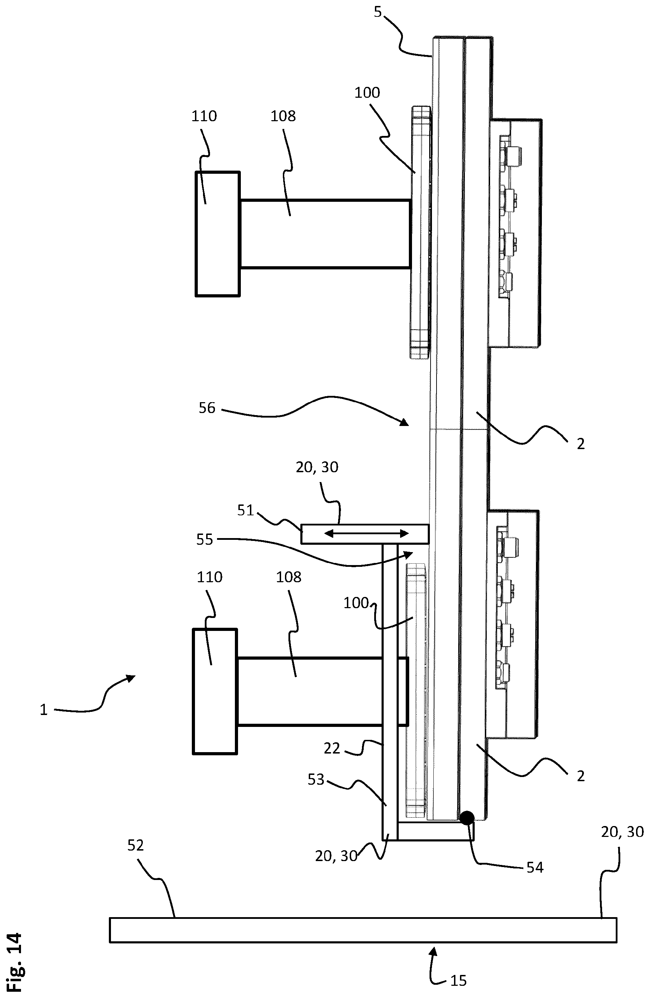

Figur 14 zeigt eine Seitenansicht des Planarantriebssystems 1 aus Figur 13, nachdem der Läufer in Richtung des Rands 15 des Planarantriebssystems 1 bewegt, und die erste bewegliche Barriere 51 und die dritte bewegliche Barriere 53 geschlossen wurden. Nun kann die zweite bewegliche Barriere 52 geöffnet und gegebenenfalls die Antriebsspulen 4 der Statoreinheiten 3 im ersten Bereich 55 stromlos geschaltet werden. Im Ausführungsbeispiel der Figuren 13 und 14 sind keine fest installierten Doppelschienen 22 als Teil einer passiven Sicherheitsvorrichtung 21 vorhanden, sodass bei geschlossener zweiter beweglicher Barriere 52 die komplette Statorfläche 5 für Bewegungen der Läufer 100 zur Verfügung steht. Dies ermöglicht einen flexibleren Einsatz des Planarantriebssystems.

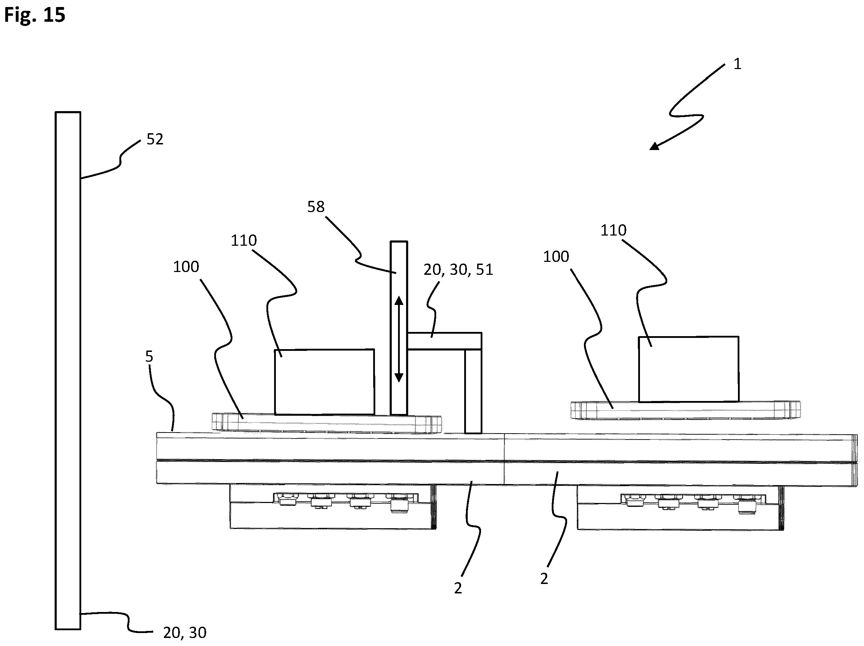

Figur 15 zeigt eine Seitenansicht eines Planarantriebssystems 1, das dem Planarantriebssystem 1 der Figur 12 entspricht, sofern im Folgenden keine Unterschiede beschrieben sind. Die erste bewegliche Barriere 51 weist einen Niederhalter 58 auf. Beim Schließen der ersten beweglichen Barriere 51 fixiert der Niederhalter 58 den Läufer 100 auf der Statorfläche 5. Dies ermöglicht, dass gleichzeitig mit dem Schließen der ersten beweglichen Barriere 51 der Läufer 100 in hinsichtlich seiner Bewegbarkeit parallel und senkrecht zur Statorfläche 5 zumindest eingeschränkt ist. Die in Figur 15 gezeigte zweite bewegliche Barriere 52 kann gegebenenfalls auch weggelassen werden, dient aber ansonsten der bereits im Zusammenhang mit Figur 12 beschriebenen Funktion.

Durch den Niederhalter 58 kann ein Objekthalter 108 entfallen und das Objekt 110 direkt auf dem Läufer 100 angeordnet sein. Ferner ist in diesem Ausführungsbeispiel möglich, die gesamte Statorfläche 5 für Bewegungen des Läufers 100 zu nutzen, wenn die erste bewegliche Barriere 51 geöffnet ist.

Der Niederhalter 58 kann auch unabhängig von der ersten beweglichen Barriere 51 vorgesehen sein. Insbesondere kann der Niederhalter 58 in Bohrungen des Läufers 100 eingreifen und so eine zusätzliche Fixierung des Läufers 100 in der ersten Richtung 11 beziehungsweise der zweiten Richtung 12 erzielen.

Die im Zusammenhang mit den Figuren 11 bis 15 beschriebene erste bewegliche Barriere 51 kann dabei derart ausgestaltet sein, dass eine komplette Abschottung des ersten Bereichs 55 vom zweiten Bereich 56 der Statorfläche 5 erzielt wird.

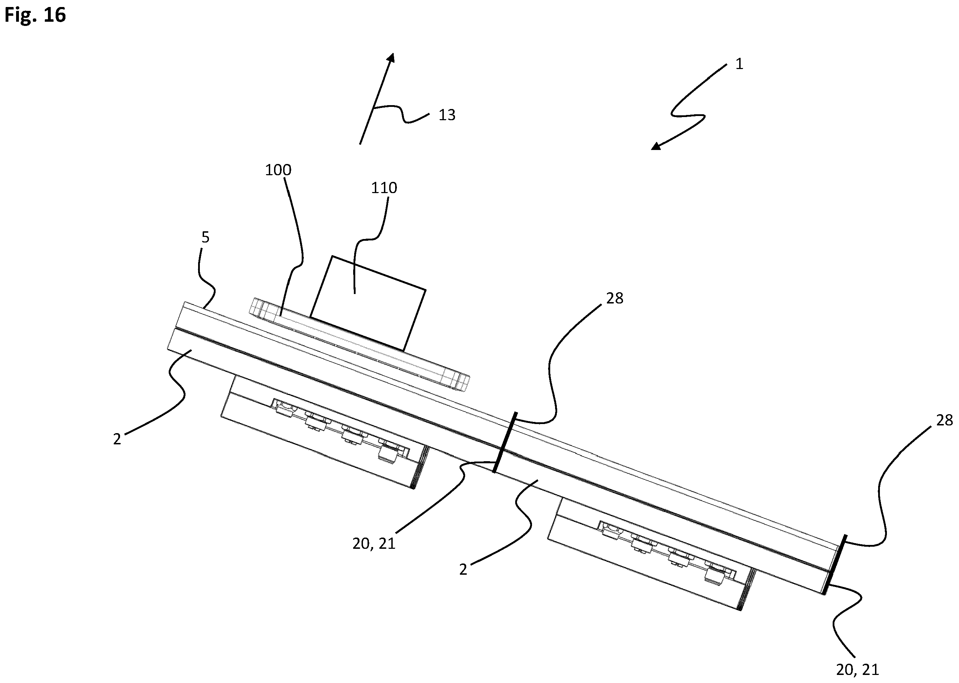

Figur 16 zeigt eine Seitenansicht eines Planarantriebssystems 1, bei dem ebenfalls ein Sicherheitssystem 20 in Form einer passiven Sicherheitsvorrichtung 21 vorgesehen ist. Es sind zwei Statormodule 2 gezeigt, wobei die Statormodule 2 derart angeordnet sind, dass die Statorfläche 5 nicht waagerecht, sondern schräg angeordnet ist. Oberhalb eines der Statormodule 2 ist ein Läufer 100 angeordnet. Zwischen den Statormodulen 2 ist ein Halteblech 28 angeordnet, dass die Statorfläche 5 überragt, beispielsweise um mindestens einen Millimeter und maximal zwei Millimeter, beispielsweise um eineinhalb Millimeter. Würde nun die elektrische Versorgung für das gesamte Planarantriebssystem 1 oder für die beiden Statormodule 2 ausfallen, so könnte der Läufer 100 gegebenenfalls die Statorfläche 5 entlang nach unten rutschen und dabei eine Gefahr für einen Bediener oder für ein transportiertes Objekt 110 darstellen. Durch das Halteblech 28 wird der Läufer 100 jedoch in seiner Beweglichkeit eingeschränkt, sodass der Läufer 100 nicht von der Statorfläche 5 rutschen kann. Insbesondere kann vorgesehen sein, dass alle Statormodule 2 ein entsprechendes Halteblech 28 aufweisen, insbesondere jeweils auf der hinsichtlich der Gravitation unteren Seite des Statormoduls. Dies ist in Fig. 16 ebenfalls dargestellt.

Im zweiten Betriebszustand wird der Läufer 100 also mittels eines der Haltebleche 28 an der Statorfläche 5 gehalten. Um den Läufer 100 wieder von der Statorfläche 5 zu lösen, wenn eine Bestromung der Spulengruppen 4 wieder möglich ist, kann vorgesehen sein, dass die Spulengruppen 4 derart bestromt werden, dass der Läufer 100 nun wieder angehoben wird derart, dass ein Abstand des Läufers 100 von der Statorfläche 5 größer ist als die Abmessung, mit der das Halteblech 28 die Statorfläche 5 überragt. Die Anzahl der Statormodule 2 kann selbstverständlich größer als zwei sein.

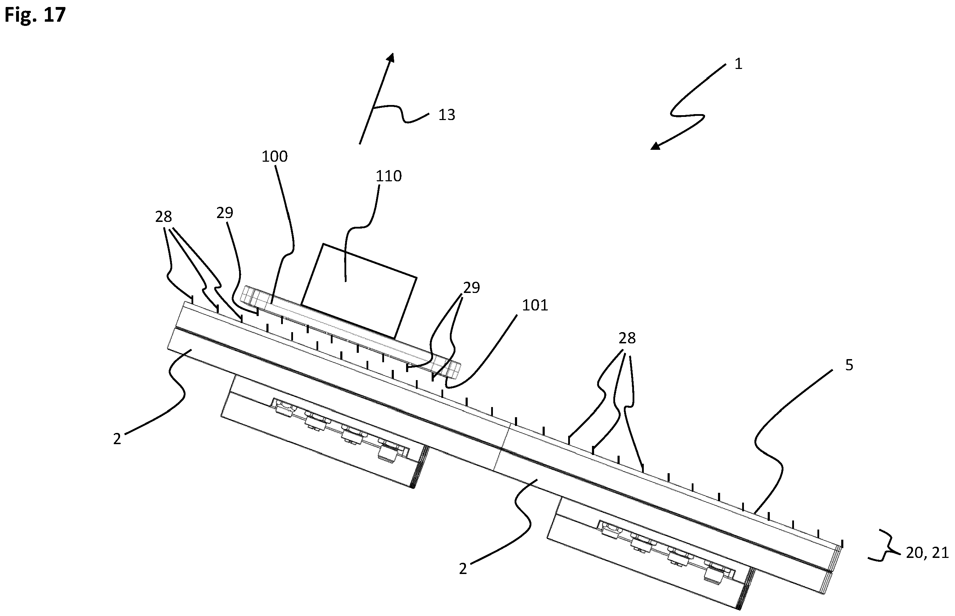

Figur 17 zeigt eine Seitenansicht eines Planarantriebssystems 1, das dem Planarantriebssystem 1 der Fig. 16 entspricht, sofern im Folgenden keine Unterschiede beschrieben sind. Das Planarantriebssystem 1 umfasst zwei Statormodule 2 und einen Läufer 100. Das Sicherheitssystem 20 in Form einer passiven Sicherheitsvorrichtung 21 weist hier mehrere Haltebleche 28 an der Statorfläche 5 auf, die die Statorfläche 5 beispielsweise um mindestens 1 Millimeter und maximal 2 Millimeter, beispielsweise um 1,5 Millimeter überragen. Die Haltebleche 28 sind dabei parallel zur Gravitation und damit schräg zur Statorfläche 5 angeordnet. Der Läufer 100 weist an seiner zur Statorfläche ausgerichteten Unterseite 101 weitere Haltebleche 29 auf, die parallel zu den Halteblechen 28 ausgerichtet sind. Würde nun die elektrische Versorgung für das gesamte Planarantriebssystem 1 oder für die beiden Statormodule 2 ausfallen, so könnte der Läufer 100 gegebenenfalls die Statorfläche 5 entlang nach unten rutschen und dabei eine Gefahr für einen Bediener oder für ein transportiertes Objekt 110 darstellen. Die Haltebleche 28 und weiteren Haltebleche 29 verhaken sich jedoch ineinander, sodass der Läufer 100 in seiner Beweglichkeit derart eingeschränkt wird, dass der Läufer 100 nicht von der Statorfläche 5 rutschen kann.

Im zweiten Betriebszustand wird der Läufer 100 also mittels der Haltebleche 28 und der weiteren Haltebleche 29 an der Statorfläche 5 gehalten. Um den Läufer 100 wieder von der Statorfläche 5 zu lösen, wenn eine Bestromung der Spulengruppen 4 wieder möglich ist, kann vorgesehen sein, dass die Spulengruppen 4 derart bestromt werden, dass der Läufer 100 nun wieder angehoben wird derart, dass ein Abstand des Läufers 100 von der Statorfläche 5 größer ist als die Abmessung, mit der die Haltebleche 28 die Statorfläche 5 und die weiteren Haltebleche 29 die Unterseite 101 des Läufers 100 überragen. Es wird also in der dritten Richtung 13 ein Abstand zwischen den Halteblechen 28 und den weiteren Halteblechen 29 ausgebildet, sodass der Läufer 100 ungehindert oberhalb der Statormodule verfahren werden kann.

Die Abstände zwischen den einzelnen Halteblechen 28 zueinander, sowie die Abstände der weiteren Haltebleche 29 zueinander können dabei aufeinander abgestimmt sein und beispielsweise zwischen fünf und fünfzehn Millimeter, insbesondere zehn Millimeter, betragen. Im Falle eines Ausfalls der Bestromung der Spulengruppen 4 kann der Läufer 100 so um maximal fünfzehn Millimeter nach unten rutschen, bis er durch das verhakten der Haltebleche 28 und der weiteren Haltebleche 29 aufgehalten wird. Selbstverständlich kann das Planarantriebssystem 1 um weitere Statormodule 2 mit Halteblechen 28 erweitert werden.

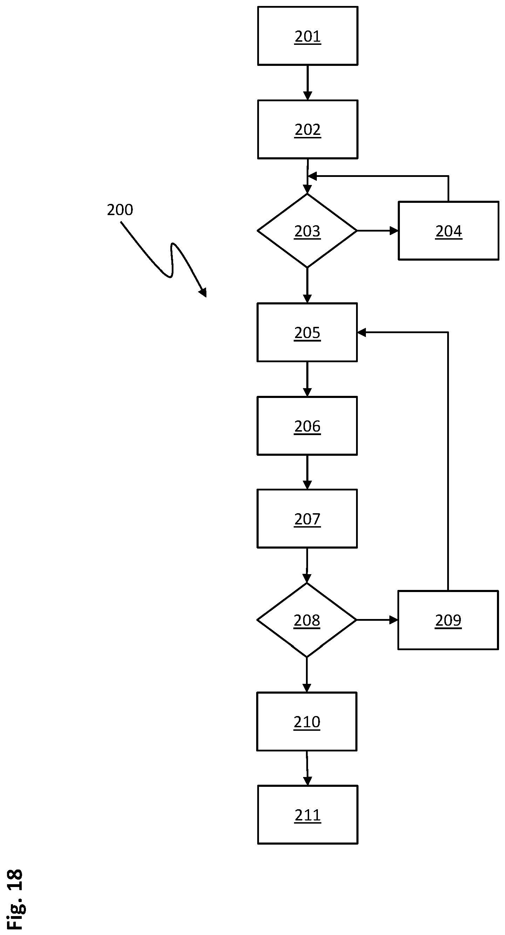

Figur 18 zeigt ein Ablaufdiagramm 200 eines Betriebsverfahrens eines Planarantriebssystems 1, welches dem Planarantriebssystem 1 der Figuren 11 bis 15 entsprechen kann. In einem ersten Verfahrensschritt 201 wird eine Beladung und/oder eine Entladung eines Läufers 100 angefordert. Dies kann beispielsweise mittels eines an die Planarantriebssystemsteuereinheit 8 übermittelten Befehls eines Bedieners oder eines Automatisierungssystems, in dem das Planarantriebssystem 1 eingesetzt wird, erfolgen. In einem zweiten Verfahrensschritt 202 werden durch die Planarantriebssystemsteuereinheit 8 Steuerbefehle ausgegeben, nach denen die Spulengruppen 4 derart bestromt werden, dass sich der Läufer 100 zur Belade- beziehungsweise Entladeposition bewegt. Dies kann jeweils im ersten Bereich 55 angeordnet sein. In einem dritten Verfahrensschritt 203 wird durch die Planarantriebssystemsteuereinheit 8 kontrolliert, ob sich der Läufer 100 in der Beladebeziehungsweise Entladeposition befindet. Dies kann beispielsweise durch Auslesen der Magnetfeldsensoren 6 erfolgen. Befindet sich der Läufer 100 noch nicht in der Belade- beziehungsweise Entladeposition, werden in einem vierten Verfahrensschritt 204 durch die Planarantriebssystemsteuereinheit 8 Steuerbefehle ausgegeben, nach denen die Spulengruppen 4 derart bestromt werden, dass sich der Läufer 100 zur Belade- beziehungsweise Entladeposition bewegt und anschließend der dritte Verfahrensschritt 203 erneut ausgeführt. Die Ausführung des vierten Verfahrensschritts 204 und des dritten Verfahrensschritts 203 erfolgt dabei gegebenenfalls mehrfach und so lange bis der Läufer 100 die Belade- beziehungsweise Entladeposition erreicht hat. Nun folgt ein fünfter Verfahrensschritt 205, in dem durch die Planarantriebssystemsteuereinheit 8 Steuerbefehle ausgegeben, nach denen die Spulengruppen 4 derart bestromt werden, dass der Läufer 100 auf die Statorfläche 5 abgesetzt wird. Nun erfolgt ein sechster Verfahrensschritt 206, in dem durch die Steuereinheit 33 Steuerbefehle ausgegeben werden, nach denen sich die erste bewegliche Barriere 51 schließt. Anschließend erfolgt ein siebter Verfahrensschritt 207, in dem durch die Steuereinheit 33 Steuerbefehle ausgegeben werden, nach denen sich der Niederhalter 58 auf den Läufer 100 bewegt. Sind Niederhalter 58 und erste bewegliche Barriere 51 einstückig, wie in Figur 15 gezeigt, können sechster Verfahrensschritt 206 und siebter Verfahrensschritt 207 gleichzeitig ausgeführt werden beziehungsweise nur der sechste Verfahrensschritt 206 oder der siebte Verfahrensschritt 207 ausgeführt werden. In einem achten Verfahrensschritt 208 wird durch die Steuereinheit 33 überprüft, ob sich die erste bewegliche Barriere 51 und/oder der Niederhalter 58 sowie der

Läufer 100 in einer vorgegebenen Position befinden. Ist dies nicht der Fall, erfolgt der neunte Verfahrensschritt 209, in dem die Steuereinheit 33 Steuerbefehle ausgibt, nach denen die erste bewegliche Barriere 51 und/oder der Niederhalter 58 wieder nach oben bewegt werden und anschließend gegebenenfalls die Planarantriebssystemsteuereinheit 8 Steuerbefehle ausgibt, nach denen der Läufer neu positioniert wird. Anschließend werden der fünfte Verfahrensschritt 205, der sechste Verfahrensschritt 206, der siebte Verfahrensschritt 207 und der achte Verfahrensschritt 208 erneut durchlaufen. Ergibt sich, gegebenenfalls nach mehrmaligem Durchlaufen der fünften bis siebten Verfahrensschritte 205, 206, 207 im achten Verfahrensschritt 208, dass sich die erste bewegliche Barriere 51 und/oder der Niederhalter 58 sowie der Läufer 100 in einer vorgegebenen Position befinden, folgt der zehnte Verfahrensschritt 210, in dem die Planarantriebssystemsteuereinheit 8 Steuerbefehle ausgibt, nach denen die Spulengruppen 4 im ersten Bereich 55 stromlos, insbesondere sicher stromlos, geschaltet werden. Sicher stromlos kann in diesem Zusammenhang bedeuten, dass sichergestellt ist, dass eine Bestromung der Spulengruppen 4 ausgeschlossen ist. Nun erfolgt der elfte Verfahrensschritt 211, in dem die Steuereinheit 33 Steuerbefehle ausgibt, nach denen die zweite bewegliche Barriere 52 geöffnet wird.

Im Ausführungsbeispiel der Figuren 13 und 14 kann im siebten Verfahrensschritt alternativ die Steuerung der dritten beweglichen Barriere 53 erfolgen und im achten Verfahrensschritt 208 die Position der dritten beweglichen Barriere 53 anstelle der Position des Niederhalters 58 überprüft werden. Im neunten Verfahrensschritt 209 wird dann die dritte bewegliche Barriere 53 wieder geöffnet.

Sind, wie in den Ausführungsbeispielen der Figuren 11 und 12 gezeigt, einzelne Bestandteile wie die dritte bewegliche Barriere 53 beziehungsweise der Niederhalter 58 nicht vorhanden, können die mit diesen Bestandteilen in Verbindung stehenden Verfahrensschritte auch weggelassen werden.

Die Steuereinheit 33 und die Planarantriebssystemsteuereinheit 8 können gegenseitig Steuerbefehle und/oder Statusinformationen austauschen. Ferner kann vorgesehen sein, dass die Steuereinheit 33 und die Planarantriebssystemsteuereinheit 8 eine gemeinsame Steuereinheit bilden, die alle Verfahrensschritte durchführt.

Die in den Figuren erläuterten passiven Sicherheitsvorrichtungen 21 und aktiven Sicherheitsvorrichtungen 30 können miteinander kombiniert werden. Beispielsweise können die beweglichen Barrieren 51, 52 der Figuren 11 bis 15 mit der Doppelschiene 22 der Figuren 4 und 5 kombiniert werden. Ferner ist es möglich, die die beweglichen Barrieren 51, 52 der Figuren 11 bis 15 mit den aktiven Sicherheitsvorrichtungen 30 der Figuren 8 bis 10 zu kombinieren. Die passive Sicherheitsvorrichtung 21 der Figur 3 kann mit der passiven Sicherheitsvorrichtung 21 der Figuren 1 und 2 sowie mit den aktiven Sicherheitsvorrichtungen 30 der Figuren 11 bis 15 kombiniert werden.

### Bezugszeichenliste

- 1: Planarantriebssystem
- 2: Statormodul
- 3: Statoreinheit
- 4: Spulengruppe
- 5: Statorfläche
- 6: Magnetfeldsensor
- 7: Statormodulgehäuse
- 8: Planarantriebssystemsteuereinheit
- 9: Datenleitung
- 11: erste Richtung
- 12: zweite Richtung
- 13: dritte Richtung
- 15: Rand
- 20: Sicherheitssystem
- 21: passive Sicherheitsvorrichtung
- 22: Doppelschiene
- 23: Zwischenraum
- 25: Klettverbindung
- 26: erster Klettstreifen
- 27: zweiter Klettstreifen
- 28: Halteblech
- 29: weiteres Halteblech
- 30: aktive Sicherheitsvorrichtung
- 31: unterbrechungsfreie Stromversorgung
- 32: Halteelement
- 33: Steuereinheit
- 34: Nothalttasche
- 35: Stift
- 36: Haken
- 40: Fluidraum
- 41: Ferrofluid
- 42: Zu- und Ableitung
- 51: erste bewegliche Barriere
- 52: zweite bewegliche Barriere
- 53: dritte bewegliche Barriere
- 54: Drehpunkt
- 55: erster Bereich
- 56: zweiter Bereich
- 58: Niederhalter
- 100: Läufer
- 101: Unterseite
- 105: Magneteinheit
- 108: Objekthalter
- 110: Objekt
- 200: Ablaufdiagramm
- 201: erster Verfahrensschritt
- 202: zweiter Verfahrensschritt
- 203: dritter Verfahrensschritt
- 204: vierter Verfahrensschritt
- 205: fünfter Verfahrensschritt
- 206: sechster Verfahrensschritt
- 207: siebter Verfahrensschritt
- 208: achter Verfahrensschritt
- 209: neunter Verfahrensschritt
- 210: zehnter Verfahrensschritt
- 211: elfter Verfahrensschritt

## Patentansprüche

1. Planarantriebssystem (1), umfassend zumindest eine Statoreinheit (3) mit jeweils einer Mehrzahl von Spulengruppen (4) zum Erzeugen eines Statormagnetfelds, eine Statorfläche (5) oberhalb der Statoreinheit (3), einen Läufer (100) und ein Sicherheitssystem (20), wobei der Läufer (100) eine Mehrzahl von Magneteinheiten (105) zum Erzeugen eines Läufermagnetfelds aufweist, wobei der Läufer (100) in einem ersten Betriebszustand oberhalb der Statorfläche (5) mittels einer Wechselwirkung des Statormagnetfelds mit dem Läufermagnetfeld parallel zur Statorfläche (5) bewegbar ist, wobei der Läufer (100) in einem zweiten Betriebszustand hinsichtlich seiner Bewegbarkeit parallel zur Statorfläche (5) durch das aktive Sicherheitssystem (20) zumindest eingeschränkt ist, wobei durch das Sicherheitssystem (20) ferner der Läufer (100) im zweiten Betriebszustand hinsichtlich seiner Bewegbarkeit senkrecht zur Statorfläche (5) zumindest eingeschränkt ist, wobei das Sicherheitssystem (20) eine aktive Sicherheitsvorrichtung (30) umfasst, wobei die aktive Sicherheitsvorrichtung (30) den Läufer (100) in seiner Bewegbarkeit einschränkt, wobei die aktive Sicherheitsvorrichtung (30) eine erste bewegliche Barriere (51) zwischen einem ersten Bereich (55) der Statorfläche (5) und einem zweiten Bereich (56) der Statorfläche (5) umfasst, wobei der Läufer (100) nach einem Schließen der ersten beweglichen Barriere (51) nicht mehr vom ersten Bereich (55) in den zweiten Bereich (56) bewegt werden kann,
**dadurch gekennzeichnet, dass**
die aktive Sicherheitsvorrichtung (30) eine zweite bewegliche Barriere (52) zwischen dem ersten Bereich (55) und einem Rand (15) des Planarantriebssystems (1) umfasst, wobei die zweite bewegliche Barriere (52) nur geöffnet werden kann, wenn die erste bewegliche Barriere (51) geschlossen ist und wenn die Antriebsspulen (4) der Statoreinheiten (3) im ersten Bereich (55) stromlos geschaltet sind, wobei die aktive Sicherheitsvorrichtung (30) eine dritte bewegliche Barriere (53) oder einen Niederhalter (58) umfasst, wobei nach dem Positionieren der dritten beweglichen Barriere (53) oder des Niederhalters (58) die Antriebsspulen (4) der Statoreinheiten (3) im ersten Bereich (55) stromlos geschaltet werden können.

2. Planarantriebssystem nach Anspruch 1, wobei die erste bewegliche Barriere (51) den Niederhalter (58) umfasst, wobei beim Schließen der ersten beweglichen Barriere (51) der Niederhalter (58) den Läufer (100) auf der Statorfläche (5) fixiert.

3. Planarantriebssystem nach Anspruch 1 oder 2, wobei die dritte bewegliche Barriere (53) eine Doppelschiene (22) umfasst, die ist an einem Drehpunkt (54) drehbar gelagert ist.

4. Planarantriebssystem nach einem der Ansprüche 1 bis 3, wobei eine Steuereinheit (8, 33) eingerichtet ist, die aktive Sicherheitsvorrichtung (30) anzusteuern.

5. Verfahren zum Betreiben eines Planarantriebssystems (1) umfassend zumindest eine Statoreinheit (3) mit jeweils einer Mehrzahl von Spulengruppen (4) zum Erzeugen eines Statormagnetfelds, eine Statorfläche (5) oberhalb der Statoreinheit (3) einen Läufer (100) mit einer Mehrzahl von Magneteinheiten (105) zum Erzeugen eines Läufermagnetfelds, wobei der Läufer (100) oberhalb der Statorfläche (5) mittels einer Wechselwirkung des Statormagnetfelds mit dem Läufermagnetfeld parallel zur Statorfläche (5) bewegbar ist, eine aktive Sicherheitsvorrichtung (30), die eine erste bewegliche Barriere (51) zwischen einem ersten Bereich (55) der Statorfläche (5) und einem zweiten Bereich (56) der Statorfläche (5) umfasst, wobei der Läufer (100) nach einem Schließen der ersten beweglichen Barriere (51) nicht mehr vom ersten Bereich (55) in den zweiten Bereich (56) bewegt werden kann, eine zweite bewegliche Barriere (52) zwischen dem ersten Bereich (55) und einem Rand (15) des Planarantriebssystems (1), wobei die zweite bewegliche Barriere (52) nur geöffnet werden kann, wenn die erste bewegliche Barriere (51) geschlossen ist und wenn die Antriebsspulen (4) der Statoreinheiten (3) im ersten Bereich (55) stromlos geschaltet sind, und eine dritte bewegliche Barriere (53) oder einen Niederhalter (58) umfasst,
mit den Verfahrensschritten
Anfordern (201) einer Beladung und/oder einer Entladung des Läufers (100), Bestromen (202) der Spulengruppen (4) derart, dass sich der Läufer (100) zur Belade-/Entladeposition, die in dem ersten Bereich (55) der Statorfläche (5) angeordnet ist, bewegt,
wenn sich der Läufer (100) in der Belade-/Entladeposition befindet, Bestromen (205) der Spulengruppen (4) derart, dass der Läufer (100) auf die Statorfläche (5) abgesetzt wird,
Schließen (206) der erste bewegliche Barriere (51),
Positionieren (207) der dritten beweglichen Barriere (53) oder des Niederhalters (58),
wenn sich die dritte bewegliche Barriere (53) oder der Niederhalter (58) in einer vorgegebenen Position befinden, Stromlos-Schalten (210) der Spulengruppen (4) im ersten Bereich (55), und
Öffnen (211) der zweiten beweglichen Barriere (52).

## Claims

1. Planar drive system (1), comprising at least a stator assembly (3), each having a plurality of coil groups (4) for generating a stator magnetic field, a stator surface (5) above the stator assembly (3), a rotor (100) and a safety system (20), wherein the rotor (100) comprises a plurality of magnet assemblies (105) for generating a rotor magnetic field, wherein, in a first operating state, the rotor (100) may be moved above the stator surface (5) in parallel with regard to the stator surface (5) with the aid of an interaction of the stator magnetic field with the rotor magnetic field, wherein, in a second operating state, the rotor (100) is at least restricted in terms of its movability in parallel with regard to the stator surface (5) by an active safety system (20), wherein, in the second operating state, the rotor (100) is further at least restricted in terms of its movability perpendicularly with regard to the stator surface (5) by the safety system (20), wherein the safety system (20) comprises an active safety device (30), wherein the active safety device (30) restricts the rotor (100) in its movability, wherein the active safety device (30) comprises a first movable barrier (51) between a first region (55) of the stator surface (5) and a second region (56) of the stator surface (5), wherein the rotor (100) may no longer be moved from the first region (55) to the second region (56) after the first movable barrier (51) has been closed,
**characterized in that**
the active safety device (30) comprises a second movable barrier (52) between the first region (55) and an edge (15) of the planar drive system (1), wherein the second movable barrier (52) may only be opened when the first movable barrier (51) is closed, and when the current supply to the drive coils (4) of the stator assemblies (3) in the first region (55) is switched off, wherein the active safety device (30) comprises a third movable barrier (53) or a hold-down device (58), wherein after positioning the third movable barrier (53) or the hold-down device (58), the current supply to drive coils (4) of the stator assemblies (3) may be switched off in the first region (55).

2. The planar drive system according to claim 1, wherein the first movable barrier (51) comprises the hold-down device (58), wherein when the first movable barrier (51) is closed, the hold-down device (58) fixes the rotor (100) on the stator surface (5).

3. The planar drive system according to claim 1 or 2, wherein the third movable barrier (53) comprises a double rail (22), which is arranged at the pivot point (54) in a rotatable manner.

4. The planar drive system according to any one of claims 1 to 3, wherein a controller (8, 33) is arranged to control the active safety device (30).

5. A method for operating a planar drive system (1) comprising at least a stator assembly (3), each having a plurality of coil groups (4) for generating a stator magnetic field, a stator surface (5) above the stator assembly (3), a rotor (100) comprising a plurality of magnet assemblies (105) for generating a rotor magnetic field, wherein the rotor (100) may be moved above the stator surface (5) in parallel with regard to the stator surface (5) with the aid of an interaction of the stator magnetic field with the rotor magnetic field, an active safety device (30) comprising a first movable barrier (51) between a first region (55) of the stator surface (5) and a second region (56) of the stator surface (5), wherein the rotor (100) may no longer be moved from the first region (55) to the second region (56) after the first movable barrier (51) has been closed, a second movable barrier (52) between the first region (55) and an edge (15) of the planar drive system (1), wherein the second movable barrier (52) may only be opened when the first movable barrier (51) is closed and when the current supply to the drive coils (4) of the stator assemblies (3) in the first region (55) is switched off and comprises a third movable barrier (53) or a hold-down device (58), comprising the method steps of
requesting (201) a loading and/or an unloading of the rotor (100),
supplying current (202) to the coil groups (4) in such a way that the rotor (100) moves to the loading/unloading position arranged in the first region (55) of the stator surface (5),
when the rotor (100) is in the loading/unloading position, supplying current (205) to the coil groups (4) in such a way that the rotor (100) is set down on the stator surface (5),
closing (206) the first movable barrier (51),
positioning (207) the third movable barrier (53) or the hold-down device (58),
when the third movable barrier (53) or the hold-down device (58) are in a predetermined position, switching off the current supply (210) of the coil groups in the first region (55), and
opening (211) the second movable barrier (52).

## Revendications

1. Système d'entraînement planaire (1) comprenant au moins une unité de stator (3) ayant respectivement une pluralité de groupes de bobines (4) pour générer un champ magnétique de stator, une surface de stator (5) au-dessus de l'unité de stator (3), un rotor (100) et un système de sécurité (20), le rotor (100) comportant une pluralité d'unités magnétiques (105) pour générer un champ magnétique de rotor, le rotor (100) étant mobile parallèlement à la surface de stator (5) dans un premier état de fonctionnement, au-dessus de la surface de stator (5), au moyen d'une interaction du champ magnétique de stator avec le champ magnétique de rotor, le rotor (100), dans un deuxième état de fonctionnement, étant au moins limité dans sa mobilité parallèlement à la surface de stator (5) par le système de sécurité actif (20), le rotor (100), dans le deuxième état de fonctionnement, étant en outre limité dans sa mobilité perpendiculairement à la surface de stator (5) par le système de sécurité (20), le système de sécurité (20) comprenant un dispositif de sécurité actif (30), le dispositif de sécurité actif (30) limitant le rotor (100) dans sa mobilité, le dispositif de sécurité actif (30) comprenant une première barrière mobile (51) entre une première zone (55) de la surface de stator (5) et une deuxième zone (56) de la surface de stator (5), le rotor (100) ne pouvant plus être déplacé de la première zone (55) vers la deuxième zone (56) après fermeture de la première barrière mobile (51),
**caractérisé en ce que**
le dispositif de sécurité actif (30) comprend une deuxième barrière mobile (52) entre la première zone (55) et un bord (15) du système d'entraînement planaire (1), la deuxième barrière mobile (52) ne pouvant être ouverte que lorsque la première barrière mobile (51) est fermée et lorsque les bobines d'entraînement (4) de l'unité de stator (3) dans la première zone (55) sont déconnectées de l'alimentation en courant, le dispositif de sécurité actif (30) comprenant une troisième barrière mobile (53) ou un élément presseur (58), les bobines d'entraînement (4) de l'unité de stator (3) dans la première zone (55) pouvant être déconnectées de l'alimentation en courant après le positionnement de la troisième barrière mobile (53) ou de l'élément presseur (58).

2. Système d'entraînement planaire selon la revendication 1, la première barrière mobile (51) comprenant l'élément presseur (58), l'élément presseur (58) fixant le rotor (100) sur la surface de stator (5) lors de la fermeture de la première barrière mobile (51).

3. Système d'entraînement planaire selon la revendication 1 ou 2, la troisième barrière mobile (53) comprenant une double glissière (22) qui est montée sur un point de pivotement (54).

4. Système d'entraînement planaire selon l'une quelconque des revendications 1 à 3, dans lequel une unité de commande (8, 33) est conçue pour commander le dispositif de sécurité actif (30).

5. Procédé de fonctionnement d'un système d'entraînement planaire (1) comprenant au moins une unité de stator (3) ayant respectivement une pluralité de groupes de bobines (4) pour générer un champ magnétique de stator, une surface de stator (5) au-dessus de l'unité de stator (3), un rotor (100) avec une pluralité d'unités magnétiques (105) pour générer un champ magnétique de rotor, le rotor (100) étant mobile parallèlement à la surface de stator (5), au-dessus de la surface de stator (5), au moyen d'une interaction du champ magnétique de stator avec le champ magnétique de rotor, un dispositif de sécurité actif (30) qui comprend une première barrière mobile (51) entre une première zone (55) de la surface de stator (5) et une deuxième zone (56) de la surface de stator (5), le rotor (100) ne pouvant plus être déplacé de la première zone (55) vers la deuxième zone (56) après la fermeture de la première barrière mobile (51), une deuxième barrière mobile (52) entre la première zone (55) et un bord (15) du système d'entraînement planaire (1), la deuxième barrière mobile (52) ne pouvant être ouverte que lorsque la première barrière mobile (51) est fermée et lorsque les bobines d'entraînement (4) de l'unité de stator (3) dans la première zone (55) sont déconnectées de l'alimentation en courant, et une troisième barrière mobile (53) ou un élément presseur (58),
comprenant les étapes consistant à
demander (201) un chargement et/ou un déchargement du rotor (100), alimenter en courant (202) les groupes de bobines (4) de telle manière que le rotor (100) se déplace vers la position de chargement/déchargement, qui est agencée dans la première zone (55) de la surface de stator (5),
lorsque le rotor (100) se trouve dans la position de chargement/déchargement, alimenter en courant (205) les groupes de bobines (4) de telle manière que le rotor (100) soit abaissé sur la surface de stator (5) fermer (206) la première barrière mobile (51),
positionner (207) la troisième barrière mobile (53) ou l'élément presseur (58),
lorsque la troisième barrière mobile (53) ou l'élément presseur (58) se trouve dans une position prédéfinie, déconnecter l'alimentation en courant (210) des groupes de bobines (4) dans la première zone (55), et
ouvrir (211) la deuxième barrière mobile (52).
